(19) **Europäisches Patentamt / European Patent Office / Office européen des brevets**

(11) **EP 4 703 060 A1**

(12) **EUROPEAN PATENT APPLICATION**
published in accordance with Art. 153(4) EPC

(43) Date of publication:
04.03.2026 Bulletin 2026/10

(21) Application number: 24797076.7

(22) Date of filing: 24.04.2024

(51) International Patent Classification (IPC):
*B21D 22/20* (2006.01)   *B21D 22/26* (2006.01)
*B62D 25/02* (2006.01)   *B62D 25/04* (2006.01)
*B62D 25/20* (2006.01)   *C23C 26/00* (2006.01)

(52) Cooperative Patent Classification (CPC):
B21D 22/20; B21D 22/26; B62D 25/02;
B62D 25/04; B62D 25/20; C23C 26/00

(86) International application number:
PCT/JP2024/016120

(87) International publication number:
WO 2024/225330 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.04.2023 JP 2023075318

(71) Applicant: NIPPON STEEL CORPORATION
Chiyoda-ku
Tokyo 100-8071 (JP)

(72) Inventors:
• KIMOTO, Naoki
Tokyo 100-8071 (JP)
• KUBO, Masahiro
Tokyo 100-8071 (JP)
• IGUCHI, Keinosuke
Tokyo 100-8071 (JP)
• YOSHIDA, Hiroshi
Tokyo 100-8071 (JP)
• IRIKAWA, Hideaki
Tokyo 100-8071 (JP)
• FUJITA, Soshi
Tokyo 100-8071 (JP)
• SUZUKI, Yuki
Tokyo 100-8071 (JP)

(74) Representative: Zimmermann & Partner
Patentanwälte mbB
P.O. Box 330 920
80069 München (DE)

(54) **BLANK, METHOD FOR MANUFACTURING STRUCTURAL MEMBER, AND STRUCTURAL MEMBER**

(57) A blank (20) includes multiple steel sheets. The multiple steel sheets are disposed to form an annular shape in plan view of the blank (20) and joined to each other. The multiple steel sheets include steel sheets (21, 22). An end part of a first steel sheet (21) and an end part of a second steel sheet (22) form an overlap part (241). Among the multiple steel sheets, a steel sheet that forms a part having a smallest sheet thickness ($t_{min}$) in the blank (20) is a plated steel sheet. The overlap part (241) has a largest sheet thickness ($t_{max}$) in the blank (20). An emissivity of a surface (216, 226) of each of the steel sheets (21, 22) that is located on an outer side of the overlap part (241) is higher than an emissivity of at least one of other surfaces of the multiple steel sheets.

FIG. 3A

**Description**

TECHNICAL FIELD

The present disclosure relates to a blank for hot stamping. The present disclosure further relates to a production method for a structural member using the blank, and the structural member.

BACKGROUND ART

Structures such as a body of an automobile are formed of multiple structural members. A structural member is produced by press-forming a blank, for example. In order to ensure high strength and high dimensional accuracy, the structural member may be produced in a press forming method referred to as hot stamping. The hot stamping is a technique of heating a blank, which is a steel sheet, to a temperature in the austenite zone, press-forming the blank with press tooling, and quenching the blank by holding the blank in the press tooling for heat dissipation (rapid cooling).

Patent Literature 1 discloses a steel sheet (blank) for hot stamping. The steel sheet according to Patent Literature 1 has a surface-treated film having an emissivity of 60% or more at a temperature of 25°C and a wavelength of 8.0 $\mu$m on the whole of at least one surface thereof. According to Patent Literature 1, the surface of the steel sheet provided with the surface-treated film is increased in emissivity and has higher heat transfer effect through radiation. Therefore, when the steel sheet is heated for hot stamping, the steel sheet is quickly heated to a temperature equal to or higher than the $A_{c3}$ point at which transformation of a metal structure into the austenite phase occurs. In Patent Literature 1, it is described that the heating time can be reduced in this way, and the productivity of the hot-stamped member can be improved.

Patent Literature 2 discloses a method of producing a body side structural frame of an automobile from multiple blanks. According to Patent Literature 2, multiple blanks are joined to form a composite blank, and the composite blank is press-formed to produce a body side structural frame. In Patent Literature 2, hot forming (hot stamping) of the composite blank is described.

CITATION LIST

PATENT LITERATURE

Patent Literature 1: International Application Publication No. WO2022/215229
Patent Literature 2: Japanese Translation of PCT International Application Publication No. 2021-528248

SUMMARY OF INVENTION

TECHNICAL PROBLEM

In recent years, to simplify production processes for structures, integration of two or more members at the stage of a blank has been studied. For example, Patent Literature 2 discloses that a composite blank having an annular shape in plan view is subjected to hot stamping, thereby producing an annular body side structural frame including a pillar, a rocker and the like integrated with each other. Patent Literature 2 discloses that adjacent steel sheets in a composite blank are overlapped and joined to each other by spot welding. When the composite blank includes such an overlap part, it is difficult to ensure a process window in production of the structural member. Specifically, for hot stamping, the blank is heated until the microstructure thereof is austenitized. However, the overlap part formed by partial overlapping of steel sheets has a larger sheet thickness than a non-overlap part, and therefore the temperature of the overlap part is slow to rise. For example, when the steel sheet having the smallest sheet thickness in the blank is a plated steel sheet, while the overlap part having the largest sheet thickness in the blank is being heated in order to ensure the strength of the overlap part by hot stamping, alloying of the plating layer of the thinnest plated steel sheet, which is more quickly heated than the other steel sheets, excessively proceeds, the diffusion layer becomes thick, and the corrosion resistance (rust resistance) owing to the plating layer may deteriorate or be lost. Thus, when the blank includes an overlap part, it is difficult to ensure a process window of the heating condition. Furthermore, the heating rate of the overlap part having the largest sheet thickness in the blank may be a bottleneck, and the productivity of the structural member may decrease.

An object of the present disclosure is to provide a blank for hot stamping that can produce a structural member that combines a strength of an overlap part having a largest sheet thickness and a rust resistance function of a part having a smallest sheet thickness.

SOLUTION TO PROBLEM

A blank for hot stamping according to the present disclosure includes multiple steel sheets. The multiple steel sheets are disposed to form an annular shape in plan view of the blank and joined to each other. The multiple steel sheets include a first steel sheet and a second steel sheet. The second steel sheet has an end part. The end part of the second steel sheet is overlaid on and joined to an end part of the first steel sheet to form an overlap part with the end part of the first steel sheet. Among the multiple steel sheets, a steel sheet that forms a part having a smallest sheet thickness in the blank is a plated steel sheet that has a base steel sheet and a plating layer provided on the base steel sheet. The overlap part has a largest sheet thickness in the blank. An emissivity of a surface of each of the first steel sheet and the second steel sheet that is located on an outer side of the overlap part is higher than an emissivity of at least one of other surfaces of the multiple steel sheets.

ADVANTAGEOUS EFFECTS OF INVENTION

With a blank for hot stamping according to the present disclosure, a structural member that combines a strength of an overlap part having a largest sheet thickness and a rust resistance function of a part having a smallest sheet thickness can be produced.

BRIEF DESCRIPTION OF THE DRAWINGS

[FIG. 1] FIG. 1 is a plan view of a structural member according to an embodiment.
[FIG. 2] FIG. 2 is a cross-sectional view taken along the line II-II in FIG. 1.
[FIG. 3A] FIG. 3A is a schematic diagram for illustrating a production method for the structural member according to the embodiment, showing a blank according to the embodiment.
[FIG. 3B] FIG. 3B is a schematic diagram for illustrating the production method for the structural member according to the embodiment, showing the blank according to the embodiment.
[FIG. 3C] FIG. 3C is a schematic diagram for illustrating the production method for the structural member according to the embodiment, showing the blank according to the embodiment.
[FIG. 3D] FIG. 3D is a schematic diagram for illustrating the production method for the structural member according to the embodiment, showing the blank according to the embodiment.
[FIG. 3E] FIG. 3E is a schematic diagram for illustrating the production method for the structural member according to the embodiment.
[FIG. 3F] FIG. 3F is a schematic diagram for illustrating the production method for the structural member according to the embodiment.
[FIG. 3G] FIG. 3G is a schematic diagram for illustrating the production method for the structural member according to the embodiment.
[FIG. 4] FIG. 4 is a cross-sectional view of the structural member produced in the production method according to the embodiment.
[FIG. 5] FIG. 5 is a plan view of a structural member according to a variation of the embodiment described above.
[FIG. 6A] FIG. 6A is a diagram showing a division pattern of a structural member in a first example.
[FIG. 6B] FIG. 6B is a diagram showing another division pattern of the structural member in the first example.
[FIG. 6C] FIG. 6C is a diagram showing another division pattern of the structural member in the first example.
[FIG. 6D] FIG. 6D is a diagram showing another division pattern of the structural member in the first example.
[FIG. 6E] FIG. 6E is a diagram showing another division pattern of the structural member in the first example.
[FIG. 6F] FIG. 6F is a diagram showing another division pattern of the structural member in the first example.
[FIG. 6G] FIG. 6G is a diagram showing another division pattern of the structural member in the first example.
[FIG. 7A] FIG. 7A is a diagram showing a division pattern of a structural member in a second example.
[FIG. 7B] FIG. 7B is a diagram showing another division pattern of the structural member in the second example.
[FIG. 7C] FIG. 7C is a diagram showing another division pattern of the structural member in the second example.
[FIG. 7D] FIG. 7D is a diagram showing another division pattern of the structural member in the second example.

DESCRIPTION OF EMBODIMENTS

A blank for hot stamping according to an embodiment includes multiple steel sheets. The multiple steel sheets are disposed to form an annular shape in plan view of the blank and joined to each other. The multiple steel sheets include a first steel sheet and a second steel sheet. The second steel sheet has an end part. The end part of the second steel sheet is overlaid on and joined to an end part of the first steel sheet to form an overlap part with the end part of the first steel sheet. Among the multiple steel sheets, a steel sheet that forms a part having a smallest sheet thickness in the blank is a plated steel sheet that has a base steel sheet and a plating layer provided on the base steel sheet. The overlap part has a largest sheet thickness in the blank. An emissivity of a surface of each of the first steel sheet and the second steel sheet that is located on an outer side of the overlap part is higher than an emissivity of at least one of other surfaces of the multiple steel sheets (a first configuration).

With the blank according to the first configuration, an end part of the first steel sheet and an end part of the second steel sheet form an overlap part having the largest sheet thickness in the blank. The emissivity of each of the first steel sheet and the second steel sheet that is located on the outer side of the overlap part is higher than the emissivity of at least one of the other surfaces of the blank. That is, in the blank, the emissivity of the surfaces on both outer sides of the overlap part is relatively high. In this way, when the blank is heated for hot stamping, the heating rate of the overlap part can be increased, so that the heating time of the overlap part can be reduced. Therefore, heating of the blank required for hot stamping can be ended before alloying of the plating layer of the steel sheet having the smallest sheet thickness, which is more quickly heated than the other steel sheets, excessively proceeds and the diffusion layer becomes thick. As a result, the strength of the overlap part having the largest sheet thickness can be ensured by the hot stamping, and the corrosion resistance (rust resistance) of the steel sheet having the smallest sheet thickness can be ensured.

As described above, with the blank according to the first configuration, a structural member that combines the strength of the overlap part having the largest sheet thickness and the rust resistance function of the part having the smallest sheet thickness can be produced. That is, with the blank, the heating rate of the overlap part having the largest sheet thickness can be increased, and as a result, a process window of the heating condition in the production of the structural member is more likely to be ensured. Furthermore, by increasing the heating rate of the overlap part, the heating time of the blank for hot stamping can be reduced, so that the productivity of the structural member can be improved. Furthermore, since the heating time of the blank is reduced, the energy consumption in the production of the structural member can be reduced, and the emissions of the greenhouse effect gas during heating of the blank for hot stamping can be reduced.

In the first configuration, each of the multiple steel sheets may be a plated steel sheet. The plated steel sheet has a base steel sheet and a plating layer provided on the base steel sheet (a second configuration).

In the second configuration, each steel sheet included in the blank is a plated steel sheet. In this case, when shaping the blank into a structural member by hot stamping, generation of oxide scales can be reduced. Therefore, after the hot stamping, the structural member does not need to be subjected to any treatment for removing oxide scales, such as shot blasting. Therefore, the productivity of the structural member can be improved.

In the second configuration, the plating layer may be an aluminum-based plating layer (a third configuration).

When each steel sheet is a plated steel sheet having an aluminum-based plating layer as in the third configuration, when the blank is heated for hot stamping, a difference in heating rate is particularly likely to occur between the overlap part having the largest sheet thickness and the steel sheet having the smallest sheet thickness. The aluminum-based plating layer is close to white in color and therefore tends to reflect thermal energy, which inhibits heating of the overlap part. However, even if each steel sheet is a plated steel sheet having an aluminum-based plating layer, if the emissivity of the surfaces on both outer sides of the overlap part is increased, heating of the overlap part can be promoted when the blank is heated for hot stamping, and the heating time of the overlap part can be reduced. As a result, the corrosion resistance of the steel sheet having the smallest sheet thickness can be ensured, and the productivity of the structural member produced from the blank can be improved.

Concerning any of the first to third configurations, the surface of each of the first steel sheet and the second steel sheet that is located on the outer side of the overlap part may be coated with a film. For example, the film has an emissivity of 60% or more at a temperature of 25°C and a wavelength of 8.0 $\mu$m (a fourth configuration).

Concerning any of the first to third configurations, the surface of each of the first steel sheet and the second steel sheet that is located on the outer side of the overlap part may be coated with a film. The film may contain carbon black, one or more oxides selected from among the group consisting of Zr oxide, Zn oxide and Ti oxide, and 0 to 0.30 g/m$^2$ silica. The carbon black and the oxide may be dispersed over the whole of the film. Provided that a content of the carbon black in the film is $X_{CB}$ (g/m$^2$), and a content of the oxide is $X_{Oxide}$ (g/m$^2$), $X_{CB}$ and $X_{Oxide}$ preferably satisfy the following Formula (1) (see Patent Literature 1) (a fifth configuration):

$$118.9 \leq 24280/\{6700/(100 + 76 \times X_{CB}) + 18000/(130 + 65 \times X_{Oxide})\} \leq 332.0$$

(1)

In any of the first to fifth configurations, the multiple steel sheets may include two or more steel sheets having different sheet thicknesses. In this case, provided that a sheet thickness of the overlap part is $t_{max}$, and a sheet thickness of the steel sheet that forms a part having a smallest sheet thickness in the blank is $t_{min}$, it is preferable that $t_{max}/t_{min} \leq 3.2$ (a

sixth configuration).

When the blank includes two or more steel sheets having different sheet thicknesses, the difference in sheet thickness between the overlap part and the steel sheet that forms the part having the smallest sheet thickness in the blank is larger than when all the steel sheets included in the blank have the same sheet thickness. When the difference in sheet thickness is excessively large, when producing the structural member from the blank by hot stamping, heating of the overlap part is delayed compared with the steel sheet that forms the part having the smallest sheet thickness in the blank, and the process window of the heating condition is more likely to be difficult to be ensured. Therefore, in the sixth configuration, the ratio between the sheet thickness $t_{max}$ of the overlap part and the smallest sheet thickness $t_{min}$: $t_{max}/t_{min}$ is set to be 3.2 or less. In this way, even if the blank includes two or more steel sheets having different sheet thicknesses, heating of the overlap part, which is the thickest part, is likely to be ended before alloying of the plating layer of the thinnest steel sheet excessively proceeds, and the process window of the heating condition is more likely to be ensured.

A production method for a structural member according to an embodiment includes a step of preparing the blank according to any one of the first to sixth configurations, a step of heating the multiple steel sheets included in the blank to an austenite transformation completion temperature or higher, and a step of shaping and quenching the heated blank into a structural member having an annular shape in plan view with press tooling (an seventh configuration).

A structural member according to an embodiment includes a member main body and a film. The member main body is formed of multiple steel sheets joined to each other and has an annular shape in plan view. The multiple steel sheets include a first steel sheet and a second steel sheet. The second steel sheet has an end part. The end part of the second steel sheet is overlaid on and joined to an end part of the first steel sheet to form an overlap part with the end part of the first steel sheet. A film is provided on a surface of each of the first steel sheet and the second steel sheet that is located on an outer side of the overlap part. The film contains 0.001 g/m² or more of one or more oxides selected from among the group consisting of Zr oxide, Zn oxide and Ti oxide (an eighth configuration).

A structural member according to an embodiment includes a member main body and a film. The member main body is formed of multiple steel sheets joined to each other and has an annular shape in plan view. The multiple steel sheets include a first steel sheet and a second steel sheet. The second steel sheet has an end part. The end part of the second steel sheet is overlaid on and joined to an end part of the first steel sheet to form an overlap part with the end part of the first steel sheet. A film is provided on a surface of each of the first steel sheet and the second steel sheet that is located on an outer side of the overlap part. The film contains 0.500 g/m² or less carbon black (a ninth configuration).

In the eighth or ninth configuration, the structural member may be a door ring part of an automobile. In this case, the member main body may include a front pillar, a center pillar and a rocker that connects the front pillar and the center pillar to each other (a tenth configuration).

In the following, embodiments of the present disclosure will be described with reference to the drawings. In the drawings, the same or corresponding components are denoted by the same reference numerals, and redundant descriptions will be omitted.

[Structural Member]

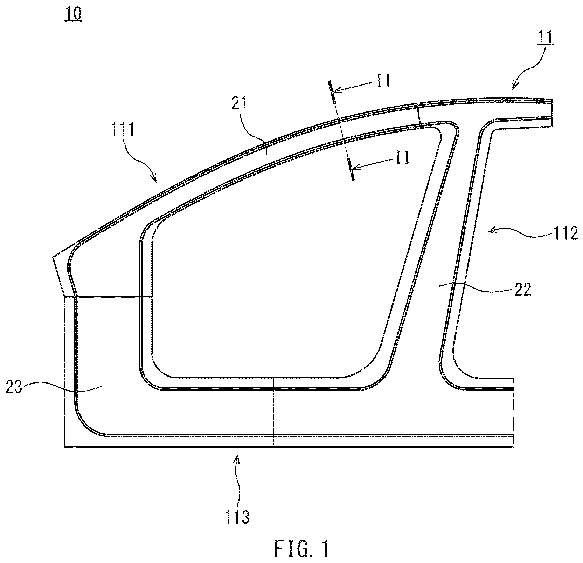

FIG. 1 is a diagram (plan view) showing a structural member 10 according to a present embodiment placed on a horizontal surface viewed from above. The structural member 10 is used for a body of an automobile, for example. The structural member 10 is typically a door ring part of an automobile. This embodiment will be described with reference to an example in which the structural member 10 is a door ring part.

The structural member 10 is a hot-stamped member. That is, the structural member 10 is produced by performing hot stamping (hot press working) on a blank formed of multiple steel sheets. The structural member 10 includes a member main body 11. The member main body 11 has an annular shape in plan view of the structural member 10. The member main body 11 includes a front pillar 111, a center pillar 112 and a rocker 113. When the structural member 10 is assembled to the body of the automobile, the center pillar 112 is disposed rearward of the front pillar 111. The center pillar 112 generally extends in the up-and-down direction of the body. The front pillar 111 extends toward the center pillar 112. When the structural member 10 is assembled to the body of the automobile, the rocker 113 is disposed below the front pillar 111 and the center pillar 112. The rocker 113 connects the front pillar 111 and the center pillar 112 to each other.

In this embodiment, the member main body 11 is formed of multiple steel sheets 21, 22 and 23 joined to each other. In the example in FIG. 1, the front pillar 111 is mainly formed of the steel sheets 21 and 23. The center pillar 112 is mainly formed of the steel sheet 22. The rocker 113 is formed of the steel sheets 22 and 23.

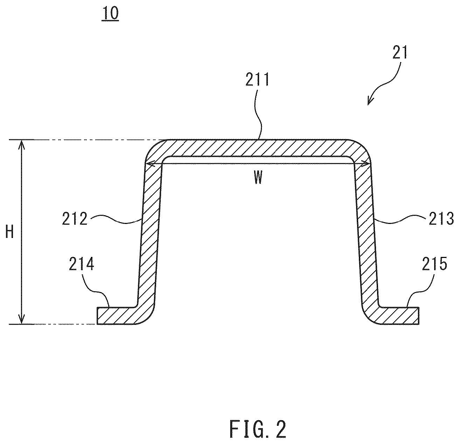

FIG. 2 is a cross-sectional view taken along the line II-II in FIG. 1. FIG. 2 shows a cross section of the structural member 10 taken at the position of the steel sheet 21 along the sheet thickness direction thereof. As shown in FIG. 2, the steel sheet 21 has an open cross section. The steel sheet 21 has a generally hat-like shaped in cross-sectional view of the structural member 10, for example. More specifically, the steel sheet 21 includes a top plate 211, vertical walls 212 and 213 and flanges 214 and 215. The vertical wall 212 is disposed on the opposite side of the top plate 211 to the vertical wall 213. In the cross-sectional view of the structural member 10, one ends of the vertical walls 212 and 213 are connected to the top plate 211. In the cross-sectional view of the structural member 10, the other ends of the vertical walls 212 and 213 are connected to the flanges 214 and 215, respectively. The flanges 214 and 215 project outward from the vertical walls 212 and 213 of the structural member 10, respectively.

In the structural member 10, a width W of the steel sheet 21, that is, a part located at an upper part of the front pillar 111 (FIG. 1), may be 15 mm or more and 300 mm or less. A height H of the steel sheet 21, that is, the part located at the upper part of the front pillar 111, may be 10 mm or more and 150 mm or less. The width W is the distance from the R-end on the vertical wall 212 side of the corner part between the top plate 211 and the vertical wall 212 to the R-end on the vertical wall 213 side of the corner part between the top plate 211 and the vertical wall 213, in the cross section of the structural member 10. The height H is the distance from the top plate 211 to the flange 214 or 215 in the sheet thickness direction of the top plate 211.

Although not shown, the other steel sheets 22 and 23 have an open cross section, as with the steel sheet 21. The steel sheets 22 and 23 can also have a generally hat-like shaped in cross-sectional view of the structural member 10. The width of a part of the steel sheet 22 that corresponds to the center pillar 112 (FIG. 1) may be 15 mm or more and 300 mm or less. The height of the part of the steel sheet 22 that corresponds to the center pillar 112 may be 10 mm or more and 150 mm or less. The width of a part of the steel sheet 23 that corresponds to a lower part of the front pillar 111 (FIG. 1) is 30 mm or more and 750 mm or less, for example. The height of the part of the steel sheet 23 that corresponds to the lower part of the front pillar 111 may be 25 mm or more and 150 mm or less. The width of a part of the steel sheet 23 that corresponds to the rocker 113 (FIG. 1) is 30 mm or more and 300 mm or less, for example. The height of the part of the steel sheet 23 that corresponds to the rocker 113 may be 25 mm or more and 150 mm or less.

The size of the structural member 10 having an annular shape in plan view is 1.0 m or more, for example. The size of the structural member 10 may be 4.0 m or less, for example. The size of the structural member 10 means the length of the line segment connecting two points that are the most distant from each other among any two points on the outer circumference of the structural member 10 when the structural member 10 placed on a horizontal surface is viewed in the vertical direction.

[Production Method for Structural Member]

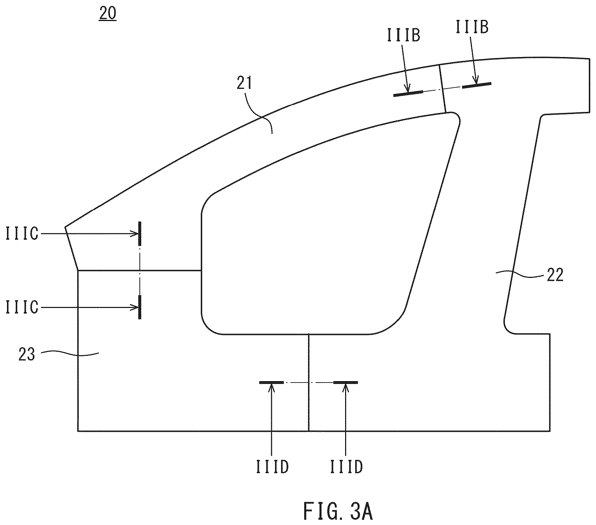

In the following, a production method for the structural member 10 will be described with reference to FIGS. 3A to 3G. The production method for the structural member 10 according to this embodiment includes a step of preparing a blank 20, a step of heating the blank 20 and a step of shaping the heated blank 20 into the structural member 10.

(Preparation Step)

As shown in FIG. 3A, in the preparation step, a blank 20 having the expanded shape of the structural member 10 is prepared. The blank 20 includes multiple steel sheets 21, 22 and 23. The steel sheets 21, 22 and 23 are disposed to form an annular shape in plan view of the blank 20 and joined to each other.

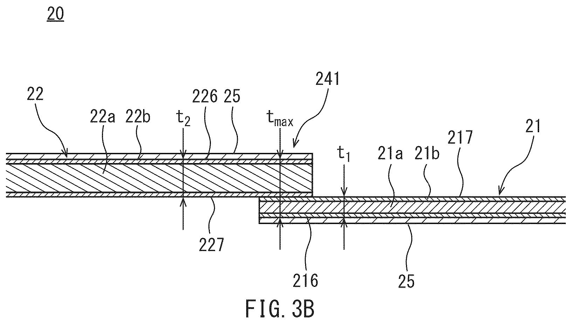

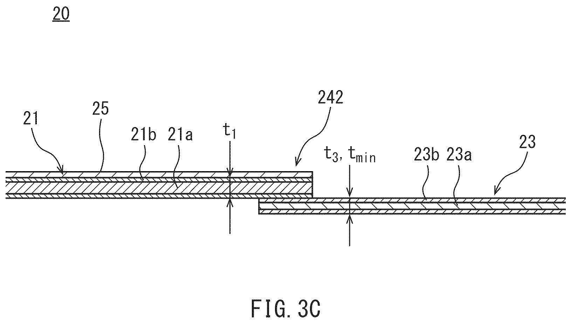

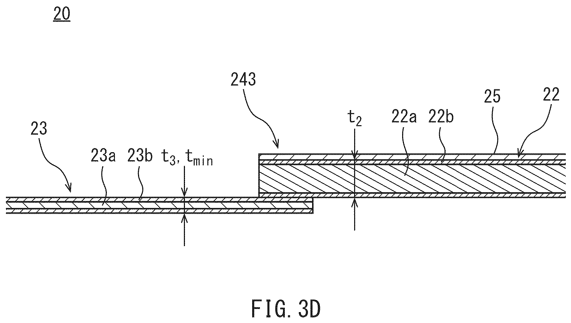

FIGS. 3B, 3C and 3D are cross-sectional views of the blank 20, showing junctures between the steel sheets 21, 22 and 23. FIGS. 3B, 3C and 3D are cross-sectional views taken along the lines IIIB-IIIB, IIIC-IIIC and IIID-IIID in FIG. 3A, respectively. With reference to FIGS. 3B and 3C, the steel sheet 21 is lap-joined to each of the steel sheets 22 and 23. Specifically, an end part of the steel sheet 22 is overlaid on and joined to an end part of the steel sheet 21, thereby forming an overlap part 241 with the end part of the steel sheet 21. Similarly, an end part of the steel sheet 23 is overlaid on and joined to an end part of the steel sheet 21, thereby forming an overlap part 242 with the end part of the steel sheet 21. With reference to FIG. 3D, the steel sheet 22 is lap-joined not only to the steel sheet 21 but also to the steel sheet 23. An end part of the steel sheet 22 is overlaid on and joined to an end part of the steel sheet 23, thereby forming an overlap part 243 with the end part of the steel sheet 23. The steel sheets 21, 22 and 23 are joined by spot welding or laser welding, for example.

With reference to FIGS. 3B to 3D, the steel sheet 21 has a sheet thickness $t_1$. The steel sheet 22 has a sheet thickness $t_2$. The steel sheet 23 has a sheet thickness $t_3$. In the example of this embodiment, the sheet thickness $t_1$ of the steel sheet 21 and the sheet thickness $t_2$ of the steel sheet 22 are larger than the sheet thickness $t_3$ of the steel sheet 23. Therefore, the overlap part 241 between the steel sheets 21 and 22 has the largest sheet thickness $t_{max}$ in the blank 20. The sheet thickness $t_{max}$ of the overlap part 241 is larger than the sheet thickness of the overlap part 242 between the steel sheets 21 and 23 and the sheet thickness of the overlap part 243 between the steel sheets 22 and 23.

In the example of this embodiment, among the multiple steel sheets 21, 22 and 23 included in the blank 20, the sheet thickness $t_3$ of the steel sheet 23 is the smallest. Therefore, the steel sheet 23 forms a part having the smallest sheet thickness $t_{min}$ in the blank 20. That is, the part of the steel sheet 23 that is not overlaid on the other steel sheets 21 and 22 is the part having the smallest sheet thickness $t_{min}$ in the blank 20, and the sheet thickness $t_3$ of the steel sheet 23 is the smallest sheet thickness $t_{min}$ in the blank 20.

When the multiple steel sheets 21, 22 and 23 have different sheet thicknesses $t_1$, $t_2$ and $t_3$ as in this embodiment, the ratio between the largest sheet thickness $t_{max}$ and the smallest sheet thickness $t_{min}$: $t_{max}/t_{min}$ in the blank 20 is more than 2.0. In this case, the largest sheet thickness $t_{max}$ and the smallest sheet thickness $t_{min}$ satisfy a relation that $t_{max}/t_{min} <$ 4.0, for example. The largest sheet thickness $t_{max}$ and the smallest sheet thickness $t_{min}$ preferably satisfy a relation that $t_{max}/t_{min} \leq 3.2$. The largest sheet thickness $t_{max}$ and the smallest sheet thickness $t_{min}$ may satisfy a relation that $t_{max}/t_{min} \geq$ 2.5. The largest sheet thickness $t_{max}$ is 4.2 mm or less, for example. The sheet thickness $t_{max}$ may be 1.6 mm or more.

The steel sheets 21 and 22 form the overlap part 241 having the largest sheet thickness $t_{max}$ in the blank 20. The emissivity of surfaces 216 and 226 of the steel sheets 21 and 22 that are located on the outer sides of the overlap part 241 is higher than the emissivity of at least one of the other surfaces of the steel sheets 21, 22 and 23 included in the blank 20. That is, the emissivity of the surfaces 216 and 226 of the steel sheets 21 and 22 that are located on the outer sides of the overlap part 241 is higher than the emissivity of surfaces 217 and 227 of the steel sheets 21 and 22 that are located on the inner side of the overlap part 241 and/or the emissivity of one surface or both surfaces of the other steel sheet 23. The surfaces 216 and 226 of the steel sheets 21 and 22 that are located on the outer sides of the overlap part 241 are surfaces that form the front and back surfaces of the overlap part 241 having the largest sheet thickness $t_{max}$. In this embodiment, the emissivity of the surfaces 216 and 226 of the steel sheets 21 and 22 that are located on the outer sides of the overlap part 241 is higher than the emissivity of the surfaces 217 and 227 that are located on the inner side of the overlap part 241. Furthermore, the emissivity of the surfaces 216 and 226 of the steel sheets 21 and 22 that are located on the outer sides of the overlap part 241 is higher than the emissivity of both surfaces of the steel sheet 23 that forms the part having the smallest sheet thickness $t_{min}$. For example, the emissivity of the surfaces 216 and 226 of the steel sheets 21 and 22 at a temperature of 25°C and a wavelength of 8.0 $\mu$m is 60% or more. The emissivity of the surfaces 216 and 226 of the steel sheets 21 and 22 at a temperature of 25°C and a wavelength of 8.0 $\mu$m is more preferably 70% or more, and even more preferably 80% or more. Among the steel sheets 21, 22 and 23 included in the blank 20, the emissivity of at least one surface other than the surfaces 216 and 226 at a temperature of 25°C and a wavelength of 8.0 $\mu$m may be less than 60%. The difference in emissivity at a temperature of 25°C and a wavelength of 8.0 $\mu$m between the surfaces 216 and 226 on the outer sides of the overlap part 241 and at least one surface other than the surfaces 216 and 226 is preferably more than 5%, more preferably more than 10%, and even more preferably more than 20%. The emissivity can be measured according to JIS R 1801 (2002). In this case, a specimen taken from the steel sheet to be measured is set in a Fourier transform infrared spectrophotometer, and the radiation intensity is measured at a temperature of 25°C and a wavelength of 8.0 $\mu$m to calculate the emissivity. Alternatively, a radiation thermometer may be used, the measurement wavelength thereof may be set at 8.0 $\mu$m, the radiation intensity of an involved region may be measured at 25°C, and the emissivity may be calculated from the ratio of the radiation intensity to the radiation intensity of a blackbody.

In this embodiment, the whole of the surface 216 of the steel sheet 21 opposite to the steel sheet 22 is coated with a film 25. Furthermore, the whole of the surface 226 of the steel sheet 22 opposite to the steel sheet 21 is coated with a film 25. On the other hand, the steel sheet 23 is provided with no film 25. Therefore, the emissivity of both outer surfaces of the overlap part 241 is higher than the emissivity of the surface of the steel sheet 23.

The film 25 is a film that is black in color, for example. The film 25 may be a surface-treated carbon-based film (a film containing carbon (C)). For example, when the lightness L* value of the surface of the film 25 (CIE 1976 lightness index L* defined in JIS Z8781-4(2013)) is 60 or less, the film 25 can be determined to be black in color. The emissivity of the film 25 at a temperature of 25°C and a wavelength of 8.0 $\mu$m is 60% or more, preferably 70% or more, and more preferably 80% or more. That is, the emissivity of the surfaces 216 and 226 of the steel sheets 21 and 22 provided with the film 25 at a temperature of 25°C and a wavelength of 8.0 $\mu$m is 60% or more, preferably 70% or more, and more preferably 80% or more. The film 25 may have an emissivity of 60% or more at a temperature of 700°C and a wavelength of 8.0 $\mu$m. As the film 25, a surface-treated film described in Patent Literature 1 may be used, for example. Specifically, the film 25 may contain carbon black and one or more oxides selected from among the group consisting of Zr oxide, Zn oxide and Ti oxide. The film 25 may or may not contain silica. In other words, the content of silica in the film 25 is 0 g/m² or more. The content of silica in the film 25 may be 0.30 g/m² or less. The content of silica is more preferably 0.10 g/m² or less, and more preferably 0.05 g/m² or less.

The carbon black and the oxide may be dispersed over the whole of a surface of the film 25 that is perpendicular to the sheet thickness direction of the steel sheet 21. Provided that the content of carbon black is $X_{CB}$ (g/m²), and the content of the one or more oxides (metal oxides) selected from among the group consisting of Zr oxide, Zn oxide and Ti oxide is $X_{Oxide}$ (g/m²), $X_{CB}$ and $X_{Oxide}$ preferably satisfy the following Formula (1).

$$118.9 \leq 24280/\{6700/(100 + 76 \times X_{CB}) + 18000/(130 + 65 \times X_{Oxide})\} \leq 332.0$$

$$(1)$$

In Formula (1), the value calculated by the middle term: $24280/\{6700/(100 + 76 \times X_{CB}) + 18000/(130 + 65 \times X_{Oxide})\}$ is preferably 119.0 or more, more preferably 170.0 or more, and even more preferably 220.0 or more. The value calculated by the middle term is preferably 330.0 or less, more preferably 310.0 or less, and even more preferably 300.0 or less.

The dispersion state of the carbon black and the metal oxide in the film 25 can be checked by surface analysis of the film 25 in terms of an element (such as C) deriving from carbon black or an element (such as Zr, Zn or Ti) deriving from the oxide with an electron probe micro analyzer (EPMA). The content $X_{CB}$ of carbon black can be measured by cross-sectional analysis of the film 25 with a transmission electron microscope (TEM). Specifically, cross-sectional analysis of a region of the film 25 having a predetermined size (film thickness of the film $25 \times 5\ \mu m$) is performed by TEM-EDS analysis, and the film thickness of the film 25 and the area fraction of particles having a carbon content of 70 mass% or more in the region are measured. Provided that the density of carbon black is $\rho$ (ton/m$^3$), the film thickness is d ($\mu m$) and the area fraction is a (%), the value of $\rho \times d \times a$ is the content $X_{CB}$ (g/m$^2$) of carbon black. The content $X_{Oxide}$ of the oxide can be determined by performing element analysis of the surface of the film 25 using an X-ray fluorescence spectrometer (ZSX Primus available from RIGAKU Holdings Corporation) and quantifying the metal Zr, Zn and Ti.

The content $X_{CB}$ of carbon black in the film 25 is preferably 0.030 g/m$^2$ or more, and more preferably 0.100 g/m$^2$ or more. Although the content $X_{CB}$ can be set in any range that satisfies Formula (1), the content $X_{CB}$ is preferably 0.800 g/m$^2$ or less, and more preferably 0.600 g/m$^2$ or less.

The film 25 may contain 5.0 or more carbon black in vol%, and preferably contains 8.0 or more carbon black in vol%. Furthermore, the film 25 may contain 40.0 or less carbon black in vol%, and preferably contains 30.0 or less carbon black in vol%.

The content $X_{Oxide}$ of the metal oxide in the film 25 is preferably 0.030 g/m$^2$ or more, and more preferably 0.060 g/m$^2$ or more. Although the content $X_{Oxide}$ can be set in any range that satisfies Formula (1), the content $X_{Oxide}$ is preferably 0.500 g/m$^2$ or less, and more preferably 0.300 g/m$^2$ or less.

The film 25 may contain 1.0 or more metal oxide in vol%. Furthermore, the film 25 may contain 30.0 or less metal oxide in vol%, and preferably contains 25.0 or less metal oxide in vol%.

The ratio between the content $X_{CB}$ (g/m$^2$) of carbon black and the content $X_{Oxide}$ (g/m$^2$) of metal oxide: $X_{Oxide}/X_{CB}$ is preferably 0.20 or more and 200.00 or less. $X_{Oxide}/X_{CB}$ is more preferably 0.40 or more and 10.00 or less, and more preferably 0.60 or more and 5.00 or less.

The film 25 may contain various kinds of binder components or addition agents, in addition to the carbon black and the metal oxides described above.

The binder component is preferably a water-dispersible or water-soluble resin. The content of the binder component is preferably 40 vol% or more of the overall volume of the film 25. As the binder component selected from among water-dispersible or water-soluble resins, various kinds of well-known resins that exhibit water dispersibility or water solubility can be used. Such resins that exhibit water dispersibility or water solubility include polyurethane resin, polyester resin, acrylic resin, epoxy resin, fluororesin, polyamide resin, polyolefin resin, and polymer compounds obtained by hydrolysis and condensation polymerization of silane coupling agents, for example. The binder component is more preferably one or more, or two or more selected from among the group consisting of polyester resin, polyurethane resin, polyolefin resin, acrylic resin, epoxy resin, fluororesin and polyamide resin. When polyurethane resin is used as the binder component, the polyurethane resin is preferably polyether-based polyurethane resin.

The addition agent is a leveling agent, a water-soluble solvent, a metal stabilizer or an etching inhibitor, for example. The leveling agent is a nonionic or cationic surface-active agent, for example. The nonionic or cationic surface-active agent may be a polyethylene oxide or polypropylene oxide adduct, or an acetylene glycol compound, for example. The water-soluble solvent may be an alcohol such as ethanol, isopropyl alcohol, t-butyl alcohol or propylene glycol, a cellosolve such as ethylene glycol monobutyl ether or ethylene glycol monoethyl ether, an ester such as ethyl acetate or butyl acetate, or a ketone such as acetone, methyl ethyl ketone or methyl isobutyl ketone, for example. The metal stabilizer may be a chelate compound such as ethylenediaminetetraacetic acid (EDTA) or diethylenetriaminepentaacetic acid (DTPA), for example. The etching inhibitor may be an amine compound such as ethylenediamine, triethylenepentamine, guanidine or pyrimidine, for example.

The film 25 can be formed by applying an organic or inorganic processing liquid containing carbon black and a metal oxide to the whole of the surfaces 216 and 226 of the steel sheets 21 and 22 and then drying the volatile constituents in the processing liquid. The processing liquid can be applied to the surfaces 216 and 226 of the steel sheets 21 and 22 with a roll coater, a curtain coater or an ink jet, for example. In the case of the ink jet, the film thickness of the film 25 can be continuously varied. The film thickness of the film 25 is 0.5 $\mu m$ or more and 5.0 $\mu m$ or less, for example. The film thickness of the film 25 is preferably 1.0 $\mu m$ or more and 3.0 $\mu m$ or less. The film thickness of the film 25 is small enough to be negligible compared with the sheet thicknesses $t_1$ and $t_2$ of the steel sheets 21 and 22. Therefore, the measured sheet thickness of the steel sheets 21 and 22 including the film 25 can be treated as the sheet thicknesses $t_1$ and $t_2$, respectively.

The steel sheet 23 having the smallest sheet thickness $t_{min}$ in the blank 20 is a plated steel sheet. In this case, the steel sheet 23 includes a base steel sheet 23a and a plating layer 23b. The type of the base steel sheet 23a is not particularly limited. The plating layer 23b is provided on the base steel sheet 23a. The plating layer 23b covers the whole or substantially the whole of both surfaces of the base steel sheet 23a. The plating layer 23b is a metal plating layer. The plating layer 23b may be a molten aluminum plating or may be a molten zinc plating, a galvannealed plating or an electrogalvanized plating, for example. As the steel sheet 23, a well-known aluminum-plated steel sheet or zinc-plated steel sheet can be used, for example. The sheet thickness $t_{min}$ of the steel sheet 23 is the total sheet thickness of the base steel sheet 23a and the plating layer 23b.

As with the steel sheet 23, the steel sheets 21 and 22 may be a well-known plated steel sheet. Specifically, the steel sheet 21 may include a base steel sheet 21a and a plating layer 21b provided on the base steel sheet 21a. The steel sheet 22 may include a base steel sheet 22a and a plating layer 22b provided on the base steel sheet 22a. The type of the base steel sheets 21a and 22a is not particularly limited. The plating layers 21b and 22b cover the whole or substantially the whole of both surfaces of the base steel sheets 21a and 22a, respectively. The plating layers 21b and 22b are metal plating layers. As the plating layers 21b and 22b, the same plating layers as those illustrated for the steel sheet 23 can be used. Specifically, as with the steel sheet 23, the steel sheets 21 and 22 may be an aluminum-plated steel sheet or a zinc-plated steel sheet. When the steel sheet 21 is a plated steel sheet, the sheet thickness $t_1$ of the steel sheet 21 is the total sheet thickness of the base steel sheet 21a and the plating layer 21b. Similarly, when the steel sheet 22 is a plated steel sheet, the sheet thickness $t_2$ of the steel sheet 22 is the total sheet thickness of the base steel sheet 22a and the plating layer 22b.

The plating layers 21b, 22b and 23b are typically a plating layer primarily containing aluminum (aluminum-based plating layer). The configuration of the aluminum-based plating layer is not particularly limited. As the plating layers 21b, 22b and 23b, a well-known aluminum-based plating layer can be used.

Each of the steel sheets 21, 22 and 23 may be the same type of plated steel sheet as the other steel sheets or may be a different type of plated steel sheet than the other steel sheets. The steel sheets 21 and 22 may be steel sheets without the plating layers 21b and 22b on the surfaces thereof (bare materials). When two or more of the steel sheets 21, 22 and 23 are plated steel sheets, the base weight of the plating of each steel sheet may be the same as that of the other steel sheets or may be different from that of the other steel sheets.

(Heating Step)

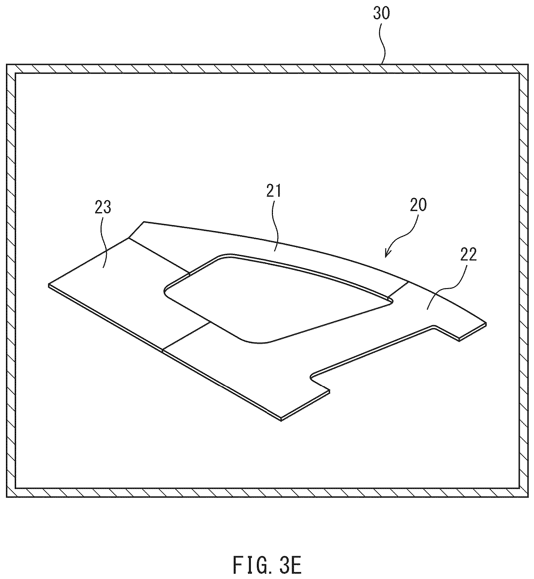

The prepared blank 20 is shaped into the structural member 10 (FIGS. 1 and 2) through hot stamping (hot press working). For the hot stamping, the blank 20 is subjected to the heating step. With reference to FIG. 3E, in the heating step, the blank 20 is heated in a heating furnace 30, for example. The multiple steel sheets 21, 22 and 23 included in the blank 20 are heated to an austenite transformation completion temperature ($A_{c3}$ point) or higher. The steel sheets 21, 22 and 23 are heated to 900°C or more, for example. In this way, the whole or substantially the whole of the microstructure of the steel sheets 21, 22 and 23 is transformed into the austenite phase, for example.

(Shaping Step)

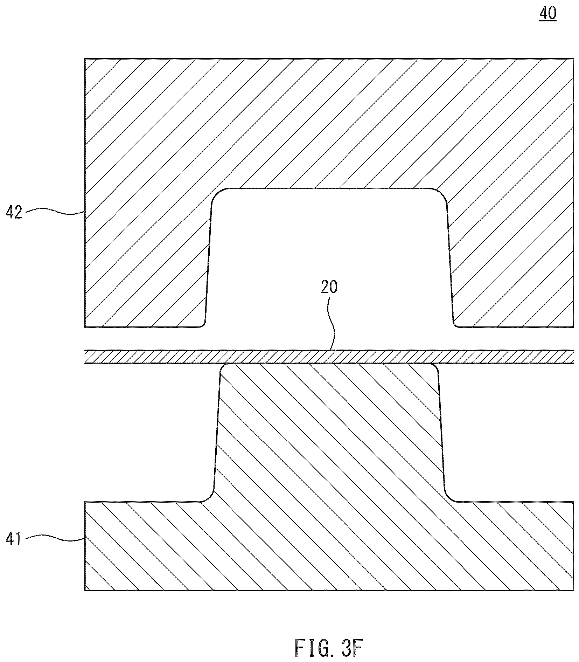

With reference to FIG. 3F, in the shaping step, using press tooling 40, the heated blank 20 is shaped into the structural member 10 having an annular shape in plan view (FIGS. 1 and 2) and quenched. The blank 20 heated in the heating step is removed from the heating furnace 30 (FIG. 3E) and conveyed to the press tooling 40. The press tooling 40 is attached to a well-known pressing device. The press tooling 40 includes a punch 41 and a die 42, for example. The blank 20 is placed between the punch 41 and the die 42.

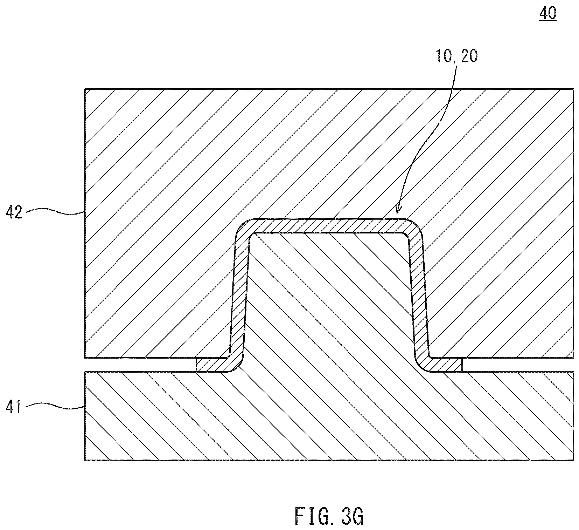

With reference to FIG. 3G, after the blank 20 is placed between the punch 41 and the die 42, the die 42 comes relatively closer to the punch 41. The blank 20 is sandwiched (pressed) between the punch 41 and the die 42 and formed into a shape conforming to the shaping surfaces of the punch 41 and the die 42. The blank 20 is kept being sandwiched between the punch 41 and the die 42. The blank 20 is made to dissipate heat (rapid cooling) in the press tooling 40, and thereby the microstructure thereof is transformed into martensite. In this way, the structural member 10 can be produced from the blank 20.

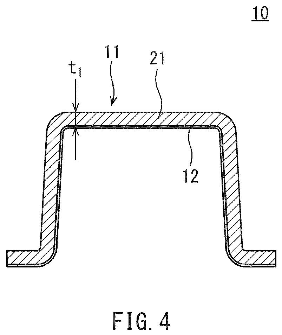

FIG. 4 is a cross-sectional view of the structural member 10 after hot stamping. FIG. 4 shows a cross section of the structural member 10 at the position of the steel sheet 21 (FIGS. 3B and 3C) that is provided with the film 25 that is black in color at the stage of the blank 20. The structural member 10 includes the member main body 11 and a film 12. The film 12 is provided on the steel sheet 21. The film 25 (FIGS. 3B and 3C) that is black in color provided to the steel sheet 21 of the blank 20 is changed into the film 12 through hot stamping. Although not shown, the film 25 (FIGS. 3B and 3D) that is black in color and provided to the steel sheet 22 of the blank 20 is changed into the film 12 through hot stamping. The film 12 is provided on the surfaces 216 and 226 (FIG. 3B) of the steel sheets 21 and 22 that are located on the outer sides of the overlap part 241. When the film 25 before hot stamping contains carbon black, the carbon black substantially disappears while heated at high temperature for hot stamping, although some of the carbon black may remain on the member main body 11. When the film 25 before hot stamping satisfies Formula (1) described above, the film 12 after hot stamping may not contain carbon black or may contain 0.500 g/m$^2$ or less carbon black. When the film 12 after hot stamping contains carbon black, the content of carbon black in the film 12 is more than 0 g/m$^2$. Furthermore, when the film 26 before hot stamping satisfies Formula (1) described above, the value calculated by the middle term: $24280/\{6700/(100 + 76 \times X_{CB}) + 18000/(130 + 65 \times X_{Oxide})\}$ for the film 12 after hot stamping is 120.0 or more and 150.0 or less.

When the film 25 (FIGS. 3B and 3C) before hot stamping satisfies Formula (1) described above, the film 12 after hot stamping contains more than 0 g/m$^2$, for example, or more preferably 0.001 g/m$^2$ or more, of one or more oxides (metal oxides) selected from among the group consisting of Zr oxide, Zn oxide and Ti oxide. The content of the metal oxide in the film 12 is 0.500 g/m$^2$ or less, for example. When the metal oxide remains in the structural member 10 in this way, that is, when the film 12 contains more than 0 g/m$^2$ of metal oxide, the corrosion resistance of the structural member 10 is advantageously improved. When the film 25 before hot stamping satisfies Formula (1) described above, the film 12 after hot stamping contains 0 to 0.30 g/m$^2$ silica.

The contents of carbon black, metal oxide and silica in the film 12 can be measured in the same manner as the film 25 at the stage of the blank 20. Specifically, an automobile body part is disassembled to obtain the annular structural member 10, and an analysis specimen is obtained from the structural member 10 by laser cutting, for example. For example, an analysis specimen is obtained from each of the multiple steel sheets included in the structural member 10. The analysis specimen is taken from a center part or a vicinity thereof of the top plate of each of the steel sheets having an open cross section. The analysis specimen obtained is adjusted by polishing the cut surface to a region outside of the region affected by the heat of laser cutting, for example, thereby preparing a film analysis specimen. Using this specimen, surface analysis of the film 12 can be performed by EPMA in terms of an element (such as C) deriving from carbon black or an element (such as Zr, Zn or Ti) deriving from the oxide, thereby checking the dispersion state of the carbon black or metal oxide in the film 12. Depending on the part of the structural member 10, the film 12 exists on the front side and/or the back side of the structural member 10, so that the front side and the back side of the analysis specimen are analyzed.

For example, an electrodeposited film or the like often exists in the outermost layer of the structural member 10. In such a case, a film layer that exists under the electrodeposited film layer and above the alloyed metal plating layer is analyzed. The content $X_{CB}$ of carbon black in the film 12 can be measured by cross-sectional analysis of the film 25 using TEM. Specifically, cross-sectional analysis of a region of the film 12 having a predetermined size (film thickness of the film 12 × 5 μm) is performed by TEM-EDS analysis, and the film thickness of the film 12 and the area fraction of particles having a carbon content of 70 mass% or more in the region are measured. Provided that the density of carbon black is ρ (ton/m$^3$), the film thickness is d (μm), and the area fraction is a (%), the value of ρ × d × a is the content $X_{CB}$ (g/m$^2$) of carbon black. The content $X_{Oxide}$ of the oxide can be determined by performing element analysis of the film layer that exists under the electrodeposited film layer and above the alloyed metal plating layer using the X-ray fluorescence spectrometer described above and quantifying the metal Zr, Zn and Ti.

After the shaping step (hot stamping), the steel sheet 21 can have a tensile strength of 0.5 GPa or more, for example, and preferably has a tensile strength of 1.0 GPa or more. Similarly, after the shaping step (hot stamping), the steel sheets 22 and 23 (FIG. 1) can have a tensile strength of 0.5 GPa or more, for example, and preferably has a tensile strength of 1.0 GPa or more. At least one of the steel sheets 21, 22 and 23 may have a tensile strength of 1.5 GPa or more after the shaping step. The tensile strength of each of the steel sheets 21, 22 and 23 may be the same as or different from the tensile strengths of the other steel sheets.

[Effects]

When the blank 20 is heated for hot stamping, in the steel sheet 23 having the smallest sheet thickness $t_{min}$, iron is diffused from the base steel sheet 23a into the plating layer 23b to form a diffusion layer. The diffusion layer increases in thickness as the heating time of the blank 20 increases, and the corrosion resistance or weldability of the steel sheet 23 owing to the plating layer 23b may deteriorate. In order to ensure the corrosion resistance and the weldability of the steel sheet 23, the thickness of the diffusion layer is preferably kept to a predetermined value or less. For example, when the steel sheet 23 is a heavy-coating steel sheet having a base weight of the plating layer 23b: approximately 50 to 80 g/m$^2$, the thickness of the diffusion layer is preferably 15 μm or less. Furthermore, when the steel sheet 23 is a light-coating steel sheet having a base weight of the plating layer 23b: approximately 40 to 50 g/m$^2$, for example, the thickness of the diffusion layer is preferably 10 μm or less. In view of this, with the blank 20 according to this embodiment, the emissivity of the surfaces 216 and 226 of the steel sheets 21 and 22 that are located on the outer sides of the overlap part 241 having the largest sheet thickness $t_{max}$ is higher than the emissivity of at least one of the other surfaces of the steel sheets 21, 22 and 23. That is, the surfaces 216 and 217 of steel sheets 21 and 22 on both outer sides of the overlap part 241 are subjected to a treatment for increasing the emissivity. In this way, when the blank 20 is heated for hot stamping, the heating rate of the overlap part 241 can be increased, and the heating time of the overlap part 241 can be reduced. Therefore, heating of the blank 20 can be ended before alloying of the plating layer 23b of the thinnest steel sheet 23, which is more quickly heated than the other steel sheets, excessively proceeds and the diffusion layer grows over the predetermined thickness. As a result, the strength of the overlap part 241 having the largest sheet thickness $t_{max}$ can be ensured in the hot stamping, and the corrosion resistance (rust resistance) of the steel sheet 23 having the smallest sheet thickness $t_{min}$ can be ensured. In addition, by keeping the thickness of the diffusion layer small, the weldability of the steel sheet 23 is likely to be ensured.

With the blank 20 according to this embodiment, as described above, the heating rate of the overlap part 241 having the largest sheet thickness $t_{max}$ can be increased. Therefore, the whole of the blank 20 can be heated to a temperature required for hot stamping before the alloying of the plating layer 23b of the thinnest steel sheet 23 excessively proceeds, and a process window of the heating condition in the production of the structural member 10 can be ensured. Therefore, the structural member 10 that combines the strength of the overlap part 241 having the largest sheet thickness $t_{max}$ and the rust resistance function at the position of the steel sheet 23 having the smallest sheet thickness $t_{min}$ can be produced. In addition, by increasing the heating rate of the overlap part 241, the heating time of the blank 20 can be reduced, and therefore, the productivity of the structural member 10 can be improved. In addition, since the heating time of the blank 20 is reduced, the energy consumption in the production of the structural member 10 can be reduced, and the emissions of the greenhouse effect gas during heating can be reduced.

In this embodiment, all of the steel sheets 21, 22 and 23 included in the blank 20 may be plated steel sheets. In that case, when shaping the blank 20 into the structural member 10 by hot stamping, generation of oxide scales can be reduced. Therefore, after the hot stamping, the structural member 10 does not need to be subjected to any treatment for removing oxide scales, such as shot blasting. Therefore, the productivity of the structural member 10 can be improved.

When the plating layers 21b, 22b and 23b of the steel sheets 21, 22 and 23 are aluminum-based plating layers, for example, a difference in heating rate is likely to occur between the overlap part 241 having the largest sheet thickness $t_{max}$ and the steel sheet 23 having the smallest sheet thickness $t_{min}$ in the heating step. The aluminum-based plating layer is white in color and therefore tends to reflect thermal energy, which inhibits heating of the overlap part 241. However, with the blank 20 according to this embodiment, the surfaces 216 and 226 of the steel sheets 21 and 22 located on both outer sides of the overlap part 241 are subjected to a treatment for increasing the emissivity. Therefore, even if the steel sheets 21 and 22 forming the overlap part 241 are plated steel sheets having an aluminum-based plating layer, heating of the overlap part 241 in the heating step is promoted, and the heating time of the overlap part 241 can be reduced. Therefore, the corrosion resistance and the weldability of the thin steel sheet 23 can be ensured, and the productivity of the structural member 10 can be improved.

In this embodiment, in the heating step, the steel sheet 23 having the smallest sheet thickness $t_{min}$ in the blank 20 first reaches a temperature in the austenite zone, and then the other parts reach the temperature in the austenite zone in ascending order of the sheet thickness. The overlap part 241 having the largest sheet thickness $t_{max}$ is the last part that reaches the temperature in the austenite zone. When the steel sheets 21, 22 and 23 included in the blank 20 have different sheet thicknesses as in this embodiment, if the smallest sheet thickness $t_{min}$ and the largest sheet thickness $t_{max}$ are excessively different, the heating of the overlap part 241 having the sheet thickness $t_{max}$ is substantially delayed compared with the steel sheet 23 having the sheet thickness $t_{min}$, and the process window of the heating condition may be unable to be ensured. In view of this, the ratio of the largest sheet thickness $t_{max}$ to the smallest sheet thickness $t_{min}$: $t_{max}/t_{min}$ is preferably 3.2 or less. In this way, even if the steel sheets 21, 22 and 23 have different sheet thicknesses, the overlap part 241 can be heated enough for the phase transformation to austenite to complete, before alloying of the plating layer 23b of the thinnest steel sheet 23 proceeds, the diffusion layer becomes thick and the corrosion resistance is lost. Therefore, a process window is likely to be ensured in production of the structural member 10.

In this embodiment, in order to increase the emissivity of the overlap part 241, among both surfaces of each of the steel sheets 21 and 22, the surface 216 of the steel sheet 21 opposite to the steel sheet 22 and the surface 226 of the steel sheet 22 opposite to the steel sheet 21 can be provided with the film 25. The emissivity of the film 25 (at a temperature of 25°C and a wavelength of 8.0 $\mu$m) is 60% or more, for example. In this way, the overlap part 241 can be efficiently radiantly heated, and the heating rate of the overlap part 241 in the heating step is likely to be raised.

In this embodiment, the film 25 can contain carbon black, one or more oxides selected from among the group consisting of Zr oxide, Zn oxide and Ti oxide, and 0 to 0.30 g/m$^2$ or less silica. The content $X_{CB}$ (g/m$^2$) of carbon black and the content $X_{Oxide}$ (g/m$^2$) of the oxide preferably satisfy Formula (1) described above. As described in Patent Literature 1, Formula (1) is a formula that defines a relationship between the increasing rate (%) of the heating rate (°C/s), and the content $X_{CB}$ of carbon black and the content $X_{Oxide}$ of the oxide. Formula (1) shows that carbon black primarily serves as a heat absorbing material in the range up to 700°C, and the oxide primarily serves as a heat absorbing material in the range of 700°C or more. When the film 25 satisfies Formula (1), the emissivity of the surfaces 216 and 226 on both outer sides of the overlap part 241 provided with the film 25 at a temperature of 25°C and a wavelength of 8.0 $\mu$m is likely to be 60% or more.

The carbon black and the oxide can be dispersed over the whole of a surface of the film 25 that is perpendicular to the sheet thickness direction of the steel sheet 21. Therefore, the emissivity of the surfaces 216 and 226 of the steel sheets 21 and 22 on both outer sides of the overlap part 241 is more likely to be uniform. Therefore, in the heating step, the overlap part 241, which is the thickest part, can be quickly and uniformly heated.

However, the configuration of the film 25 is not limited to this. The film 25 can be any film that is substantially black in color in order to increase the emissivity of the surfaces 216 and 226 on both outer sides of the overlap part 241 compared with the case where the surfaces 216 and 226 are not subjected to any treatment. For example, the film 25 may contain graphite, soot or the like, instead of or in addition to carbon black. Alternatively, in order to increase the emissivity of the surfaces 216 and 226 on both outer sides of the overlap part 241, the film 25 may contain an acicular compound having a hexagonal crystal structure having an aspect ratio of 4 or more and 50 or less, for example. Although the compound having a hexagonal crystal structure is typically graphite (C), the compound may be lanthanum silicate, magnesium diboride, beryllium oxide (beryllia), zinc oxide, β-quartz, millerite (NiS), wurtzite (ZnS) or the like.

Although embodiments of the present disclosure have been described above, the present disclosure is not limited to the embodiments described above, and various modifications can be made without departing from the spirit of the present disclosure.

In the embodiment described above, the emissivity of both surfaces of the steel sheet 23 having the smallest sheet thickness $t_{min}$ is lower than the emissivity of the surfaces 216 and 226 of the steel sheets 21 and 22 that are located on the outer sides of the overlap part 241. That is, the steel sheet 23 is not provided with the film 25, unlike the overlap part 241. However, the emissivity of at least one surface of the steel sheet 23 having the smallest sheet thickness $t_{min}$ may be substantially equal to the emissivity of the surfaces 216 and 226 on both outer sides of the overlap part 241. For example, one surface or both surfaces of the steel sheet 23 may be coated with a film 25 similar to the film on the overlap part 241. However, from the viewpoint of ensuring a process window, at least one surface of the steel sheet 23 is preferably not provided with the film 25 that is black in color. In other words, the emissivity of the surfaces 216 and 226 of the steel sheets 21 and 22 that are located on the outer sides of the overlap part 241 is preferably higher than the emissivity of at least one surface of the steel sheet 23 having the smallest sheet thickness $t_{min}$.

In the embodiment described above, the emissivity of the surfaces 217 and 227 of the steel sheets 21 and 22 that are located on the inner side of the overlap part 241 is lower than the emissivity of the surfaces 216 and 226 that are located on the outer sides of the overlap part 241. That is, the surfaces 217 and 227 of the steel sheets 21 and 22 that are located on the inner side of the overlap part 241 are not provided with the film 25. However, the surface 217 of the steel sheet 21 that is located on the inner side of the overlap part 241 may be coated with the film 25. Similarly, the surface 227 of the steel sheet 22 that is located on the inner side of the overlap part 241 may be coated with the film 25. However, from the viewpoint of uniformly heating the blank 20 for hot stamping, it is preferable that the surfaces 216 and 226 of the steel sheets 21 and 22 that are located on the outer sides of the overlap part 241 are coated with the film 25 that is substantially black in color, while the surfaces 217 and 227 that are located on the inner side of the overlap part 241 is not preferably coated with the film 25. When both surfaces 216 and 217 of the steel sheet 21 are coated with the film 25, heating of the part of the steel sheet 21 that is not overlaid on the steel sheet 22 may excessively proceed, the diffusion layer may become thick, and it may be difficult to ensure the corrosion resistance and the weldability of the steel sheet 21. Similarly, when both surfaces 226 and 227 of the steel sheet 22 are coated with the film 25, heating of the part of the steel sheet 22 that is not overlaid on the steel sheet 21 may excessively proceed, the diffusion layer may become thick, and the corrosion resistance and the weldability of the steel sheet 22 may deteriorate. Therefore, in order to more easily ensure high corrosion resistance and weldability, it is preferable that the surfaces 217 and 227 of the steel sheets 21 and 22 that are located on the inner side of the overlap part 241 are not provided with the film 25, while the surfaces 216 and 226 located on the outer sides of the overlap part 241 are provided with the film 25.

In the embodiment described above, due to the presence of the film 25 that is substantially black in color, the emissivity of the surfaces 216 and 226 on both outer sides of the overlap part 241 having the largest sheet thickness $t_{max}$ is higher than the emissivity of one or more of the other surfaces of the steel sheets 21, 22 and 23. However, the means for increasing the emissivity of a selected part of the blank 20 is not limited to the film 25. For example, the emissivity of a selected part may be increased to be higher than the emissivity of the other parts by increasing the surface roughness of the selected part to be higher than the surface roughness of the other parts.

In the embodiment described above, each of the steel sheets 21, 22 and 23 included in the blank 20 may be single-layer or multilayer. That is, each of the steel sheets 21, 22 and 23 may be a single steel sheet or a sheet material formed by multiple steel sheets overlaid on one another.

In the embodiment described above, end parts of the steel sheets 21 and 22 are lap-joined to each other to form the overlap part 241. Similarly, end parts of the steel sheets 21 and 23 are lap-joined to each other to form the overlap part 242. Furthermore, end parts of the steel sheets 22 and 23 are lap-joined to each other to form the overlap part 243. However, the blank 20 has only to include at least one overlap part. In other words, the steel sheet 23 does not necessarily need to be lap-joined to the steel sheets 21 and 22. The steel sheet 23 may be butt-joined to one or both of the steel sheets 21 and 22.

In the embodiment described above, the blank 20 includes three steel sheets 21, 22 and 23. However, the number of steel sheets included in the blank 20 is not limited to this. The blank 20 may be formed of two steel sheets or may include four or more steel sheets. The blank 20 having an annular shape in plan view typically includes three or more steel sheets. Among the steel sheets included in the blank 20, the steel sheets 21 and 22 that form the overlap part 241 having the largest sheet thickness $t_{max}$ have the surfaces 216 and 226, which are located on the outer sides of the overlap part 241, subjected to a treatment for increasing the emissivity. The other steel sheets may or may not be subjected to the treatment for increasing the emissivity. The blank 20 has only to include one or more steel sheets that have one surface or both surfaces that are not subjected to the treatment for increasing the emissivity.

With the blank 20 according to the embodiment described above, the other steel sheets 21 and 22 than the steel sheet 23 that forms the part having the smallest sheet thickness $t_{min}$ form the overlap part 241 having the largest sheet thickness $t_{max}$. However, the steel sheet 21 or 22 that forms the overlap part 241 may be the steel sheet having the smallest sheet thickness $t_{min}$ in the blank 20.

In the embodiment described above, the blank 20 includes only one overlap part 241 having the largest sheet thickness $t_{max}$. However, the blank 20 may include multiple overlap parts having the largest sheet thickness $t_{max}$. In that case, both outer surfaces of all the overlap parts having the largest sheet thickness $t_{max}$ are preferably subjected to the treatment for increasing the emissivity.

With the blank 20 according to the embodiment described above, the multiple steel sheets 21, 22 and 23 have different sheet thicknesses. However, two or more of the steel sheets included in the blank 20 may have the same sheet thickness, or all the steel sheets may have the same sheet thickness. When all the steel sheets included in the blank 20 have the same sheet thickness, the part of each steel sheet that does not form an overlap part forms the part having the smallest sheet thickness $t_{min}$ in the blank 20, and each overlap part has the largest sheet thickness $t_{max}$. In this case, again, the emissivity of both outer surfaces of the overlap part having the largest sheet thickness $t_{max}$ is higher than the emissivity of at least one of the other surfaces. When all the steel sheets included in the blank 20 have the same sheet thickness, $t_{max}/t_{min}$ is 2.0.

In the embodiment described above, the press tooling 40 used for hot stamping of the blank 20 includes the punch 41 and the die 42. However, the configuration of the press tooling 40 is not limited to the example described in the embodiment described above. The press tooling 40 may further include a pad or a blank holder, for example.

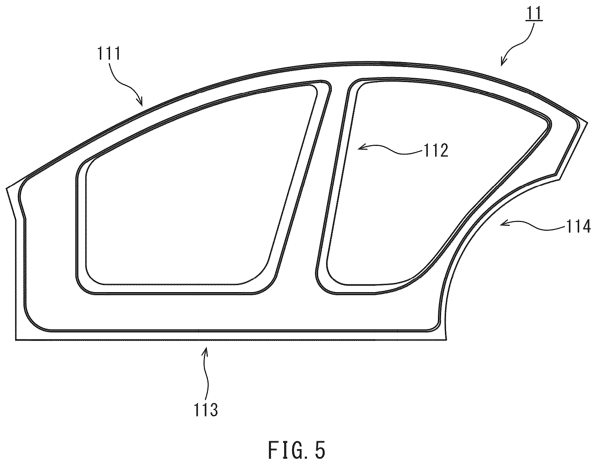

In the embodiments described above, the main body 11 of the structural member 10 includes the front pillar 111, the center pillar 112 and the rocker 113. However, the member main body 11 may further include another component. For example, as shown in FIG. 5, the member main body 11 may further include a rear pillar 114. The structural member 10 according to the embodiments described above are door ring parts (single door ring parts) having a single ring shape. On the other hand, the structural member shown in FIG. 5 is a door ring part (double door ring part) having a double ring shape. When producing the double door ring part, the blank used as the starting material also has the double ring shape.

EXAMPLES

In the following, the present disclosure will be described in more detail with reference to examples. However, the present disclosure is not limited to the examples described below.

[First Example]

In order to check the effects of the present disclosure, using commercially available software (AUTOFORM R. 10 available from AUTOFORM), CAE analysis of the press forming (hot stamping) of structural members that were single door ring parts was performed for different types (types of starting materials) and sheet thicknesses of steel sheets included in the structural members and different division patterns of the structural members.

Table 1 shows the steel sheets used in this analysis.

[Table 1]

TABLE 1

| Symbol | Type of starting material | Base material | Film specifications |
|---|---|---|---|
| A | Al-Si 1.5G HS | Steel sheet for 1.5 GPa class hot stamping | No film |
| A-1 | Al-Si 1.5G HS | Steel sheet for 1.5 GPa class hot stamping | Black film/one side |
| A-2 | Al-Si 1.5G HS | Steel sheet for 1.5 GPa class hot stamping | Black film/both sides |
| B | Al-Si 2.00 HS | Steel sheet for 2.0 GPa class hot stamping | No film |
| B-1 | Al-Si 2.0G HS | Steel sheet for 2.0 GPa class hot stamping | Black film/one side |
| B-2 | Al-Si 2.0G HS | Steel sheet for 2.0 GPa class hot stamping | Black film/both sides |
| C | Al-Si 2.5G HS | Steel sheet for 2.5 GPa class hot stamping | No film |
| C-1 | Al-Si 2.5G HS | Steel sheet for 2.5 GPa class hot stamping | Black film/one side |
| C-2 | Al-Si 2.5G HS | Steel sheet for 2.5 GPa class hot stamping | Black film/both sides |
| D | Al-Si 1.0G HS | Steel sheet for 1.0 GPa class hot stamping | No film |
| D-1 | Al-Si 1.0G HS | Steel sheet for 1.0 GPa class hot stamping | Black film/one side |
| D-2 | Al-Si 1.0G HS | Steel sheet for 1.0 GPa class hot stamping | Black film/both sides |

(continued)

| Symbol | Type of starting material | Base material | Film specifications |
|---|---|---|---|
| E | Al-Si 0.5G HS | Steel sheet for 0.5 GPa class hot stamping | No film |
| E-1 | Al-Si 0.5G HS | Steel sheet for 0.5 GPa class hot stamping | Black film/one side |
| E-2 | Al-Si 0.50 HS | Steel sheet for 0.5 GPa class hot stamping | Black film/both sides |

In Table 1, the "type of starting material" shows type of plating, tensile strength and use (hot stamping) in this order. Concerning the film specifications, "black film" is a film that contains carbon black and metal oxide and is black in color. "Black film/one side" means that the whole of one surface of the steel sheet is coated with a black film. "Black film/both sides" means that the whole of both surfaces of the steel sheet is coated with a black film.

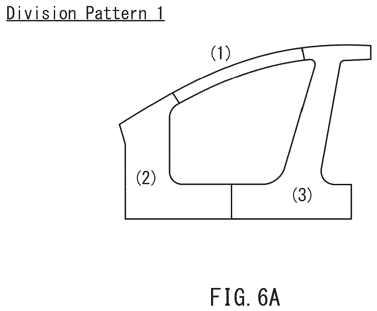

FIGS. 6A to 6G show division patterns of the structural member. FIGS. 6A to 6G show the number of steel sheets (starting materials) included in the structural members that are single door ring parts and the positions of the junctures between the steel sheets in the structural members. In FIGS. 6A to 6G, each steel sheet is denoted by a numeral in parentheses.

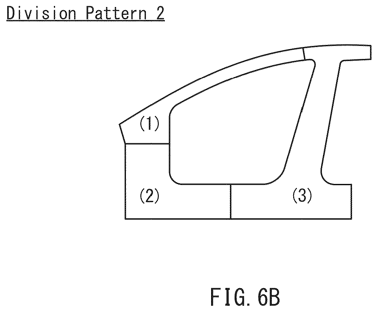

Table 2 shows analysis conditions and results for division patterns 1 and 2 shown in FIGS. 6A and 6B. In FIGS. 6A and 6B, the structural member is formed of three starting materials (1) to (3). The starting materials (1) to (3) are each lap-joined to adjacent starting materials.

[Table 2]

TABLE 2

| Symbol | Division pattern | Starting material (1) | | Starting material (2) | | Starting material (3) | | Smallest sheet thickness $t_{min}$, mm | Largest sheet thickness $t_{max}$, mm | Time required to reach 910°C, s | Heating completion time, s | PW, s |
| | | Type of starting material | Sheet thickness, mm | Type of starting material | Sheet thickness, mm | Type of starting material | Sheet thickness, mm | | | | | |
| --- | --- | --- | --- | --- | --- | --- | --- | --- | --- | --- | --- | --- |
| Example 1 | 1 | B-1 | 1.4 | D-1 | 1.4 | B-1 | 1.2 | 1.2 | 2.8 | 128.5 | 269.0 | 104.5 |
| Example 2 | 1 | B | 1.2 | D-1 | 1.3 | A-1 | 1.6 | 1.2 | 2.9 | 128.5 | 277.5 | 96.0 |
| Example 3 | 2 | A-1 | 1.6 | D-1 | 1.2 | A-1 | 1.8 | 1.2 | 3.4 | 128.5 | 327.0 | 46.5 |
| Comparative example 1 | 1 | B | 1.4 | D | 1.4 | B | 1.2 | 1.2 | 2.8 | 149.5 | 349.5 | 45.0 |
| Comparative example 2 | 2 | A | 1.6 | D | 1.2 | A | 1.8 | 1.2 | 3.4 | 149.5 | 424.5 | -30.0 |

In Table 2, "time required to reach 910°C" means the time required for the starting material having the smallest sheet thickness $t_{min}$ among the starting materials included in the blank to reach 910°C ($A_{c3}$ point or higher) after the start of heating of the blank. "Heating completion time" means the time required for a part that is the slowest to rise in temperature in the blank to reach 910°C so that hot stamping can be performed after the start of heating of the blank. "Process window (PW)" means a value obtained by subtracting the heating completion time from the sum of the allowable heating time (245 seconds) after the starting material having the smallest sheet thickness $t_{min}$ reaches 910°C and the time required to reach 910°C. The greater this value, the wider the process window of the heating condition in hot stamping of the structural member.

With reference to Table 2 and FIG. 6A, in Example 1, the starting material (1) and the starting material (2) formed an overlap part having the largest sheet thickness $t_{max}$ = 2.8 mm, and the surface of each of the starting materials (1) and (2) that was located on the outer side of the overlap part was provided with a black film. On the other hand, the surface of each of the starting materials (1) and (2) that was located on the inner side of the overlap part was not provided with the black film. Furthermore, in Example 1, the starting material (3) had the smallest sheet thickness $t_{min}$ = 1.2 mm, and only one surface of the starting material (3) was provided with the black film. In Comparative example 1, in which the combination of the type of the starting material and the sheet thickness was the same as in Example 1, any of the starting materials (1) to (3) was not provided with the black film. In Example 1, since both outer sides of the overlap part, which was the thickest part, were provided with the black film, heating of the overlap part was promoted, and the heating completion time of the blank was substantially reduced compared with Comparative example 1. In Example 1, even though the thinnest starting material (3) was provided with the black film and therefore the time required to reach 910°C was shorter than in Comparative example 1, the process window was enlarged by almost 60 seconds compared with Comparative example 1.

With reference to Table 2 and FIG. 6B, in Example 3, the starting material (1) and the starting material (3) formed an overlap part having the largest sheet thickness $t_{max}$ = 3.4 mm, and the surface of each of the starting materials (1) and (3) that was located on the outer side of the overlap part was provided with a black film. On the other hand, the surface of each of the starting materials (1) and (3) that was located on the inner side of the overlap part was not provided with the black film. Furthermore, in Example 3, the starting material (2) had the smallest sheet thickness $t_{min}$ = 1.2 mm, and only one surface of the starting material (2) was provided with the black film. In Comparative example 2, in which the combination of the type of the starting material and the sheet thickness was the same as in Example 3, any of the starting materials (1) to (3) was not provided with the black film. In Example 3, since both outer sides of the overlap part, which was the thickest part, were provided with the black film, heating of the overlap part was promoted, and the heating completion time of the blank was substantially reduced compared with Comparative example 2. In Example 3, even though the thinnest starting material (2) was provided with the black film and therefore the time required to reach 910°C was shorter than in Comparative example 2, the process window was enlarged by 70 seconds or more compared with Comparative example 2. In Comparative example 2, the process window of the heating condition was lost (negative).

In Example 2, the starting material (2) and the starting material (3) formed an overlap part having the largest sheet thickness $t_{max}$ = 2.9 mm, and the surface of each of the starting materials (2) and (3) that was located on the outer side of the overlap part was provided with a black film. On the other hand, the surface of each of the starting materials (2) and (3) that was located on the inner side of the overlap part was not provided with the black film. Furthermore, in Example 2, the starting material (1) had the smallest sheet thickness $t_{min}$ = 1.2 mm. In Example 2, again, it was ascertained that a sufficient process window was ensured.

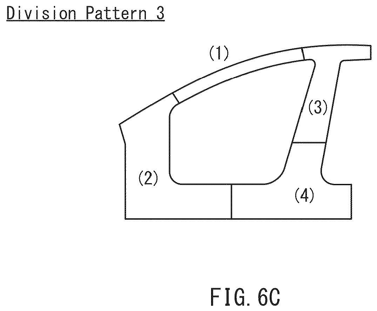

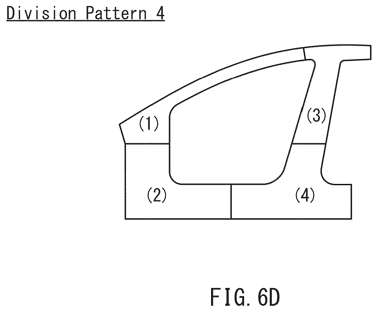

Table 3 shows analysis conditions and results for division patterns 3 and 4 shown in FIGS. 6C and 6D. In FIGS. 6C and 6D, the structural member is formed of four starting materials (1) to (4). The starting materials (1) to (4) are each lap-joined to adjacent starting materials.

[Table 3]

TABLE 3

| Symbol | Division pattern | Starting material (1) | | Starting material (2) | | Starting material (3) | | Starting material (4) | | Smallest sheet thickness $t_{min}$, mm | Largest sheet thickness $t_{max}$, mm | Time required to reach 910°C, s | Heating completion time, s | PW, s |
|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | | | | | |
| Example 4 | 3 | C-1 | 2.0 | A-1 | 1.6 | A-1 | 1.6 | A | 1.4 | 1.4 | 3.6 | 174.5 | 346.0 | 73.5 |
| Example 5 | 4 | B-1 | 1.4 | B-1 | 1.4 | B-1 | 1.6 | C-2 | 1.2 | 1.2 | 3.0 | 115.0 | 288.0 | 72.0 |
| Example 6 | 4 | B-1 | 1.6 | A | 1.6 | A-1 | 1.8 | A-1 | 1.4 | 1.4 | 3.4 | 150.0 | 327.0 | 68.0 |
| Example 7 | 3 | B-1 | 1.6 | D | 1.4 | B-1 | 2.0 | D-1 | 1.6 | 1.4 | 3.6 | 174.5 | 346.0 | 73.5 |
| Example 8 | 4 | A-1 | 2.0 | C-1 | 1.6 | B-1 | 2.0 | A | 1.4 | 1.4 | 4.0 | 174.5 | 384.5 | 35.0 |
| Example 9 | 4 | A-1 | 1.2 | B | 1.4 | B-1 | 1.4 | D-1 | 1.2 | 1.2 | 2.6 | 128.5 | 250.0 | 123.5 |
| Example 10 | 4 | A | 1.6 | A-1 | 1.6 | B-1 | 2.0 | A-1 | 1.6 | 1.6 | 3.6 | 171.5 | 346.0 | 70.5 |
| Comparative example 3 | 3 | C | 1.6 | A | 1.6 | B | 2.0 | A | 1.6 | 1.6 | 3.6 | 199.5 | 449.5 | -5.0 |
| Comparative example 4 | 4 | A | 2.0 | C | 1.6 | B | 2.0 | A | 1.4 | 1.4 | 4.0 | 174.5 | 499.5 | -80.0 |
| Comparative example 5 | 4 | B | 1.6 | A | 1.6 | A | 1.8 | A | 1.4 | 1.4 | 3.4 | 174.5 | 424.5 | -5.0 |
| Comparative example 6 | 3 | B | 1.6 | D | 1.4 | B | 2.0 | D | 1.6 | 1.4 | 3.6 | 174.5 | 449.5 | -30.0 |
| Comparative example 7 | 4 | A | 1.2 | B | 1.4 | B | 1.4 | D-2 | 1.2 | 1.2 | 2.6 | 115.0 | 324.5 | 35.5 |

**EP 4 703 060 A1**

In Examples 4 to 10 shown in Table 3, as in Examples 1 to 3 (Table 2), at least both outer surfaces of the overlap part having the largest sheet thickness $t_{max}$ were provided with the black film. Therefore, in Examples 4 to 10, again, a sufficient process window of the heating condition was able to be ensured. As can be seen, the process window in each example was enlarged compared with a corresponding comparative example.

For example, in Example 8, the starting material (1) and the starting material (3) formed an overlap part having the largest sheet thickness $t_{max}$ = 4.0 mm, and the surface of each of the starting materials (1) and (3) that was located on the outer side of the overlap part was provided with a black film (Table 3 and FIG. 6D). On the other hand, in Comparative example 4, in which the combination of the type of the starting material and the sheet thickness was the same as in Example 8, any of the starting materials, including the overlap part, was not provided with the black film. In Example 8, heating of the overlap part was promoted, and the heating completion time of the blank was substantially reduced compared with Comparative example 4. In Example 8, the process window was enlarged by 100 seconds or more compared with the comparative example 4. In Comparative example 4, the process window of the heating condition was lost (negative).

For example, in Example 9, the starting materials (1) and (3) and the starting materials (3) and (4) each formed an overlap part having the largest sheet thickness $t_{max}$ = 2.6 mm, and the surface of each of the starting materials (1), (3) and (4) that was located on the outer side of the overlap part was provided with a black film (Table 3 and FIG. 6D). On the other hand, in Comparative example 7, in which the combination of the type of the starting material and the sheet thickness was the same as in Example 9, the starting materials (1) and (3) that formed an overlap part were not provided with the black film. In Example 9, heating of the overlap part was promoted, and the heating completion time of the blank was substantially reduced compared with Comparative example 7. In Example 9, the process window was enlarged by 80 seconds or more compared with Comparative example 7. In Comparative example 7, both surfaces of the thinnest starting material (4) were provided with the black film, and the time required to reach 910°C was a little more than 10 seconds shorter than in Example 9. However, in Example 9, the heating completion time of the blank was reduced by 70 seconds or more compared with Comparative example 7, and therefore, it can be said that the process window was enlarged compared with Comparative example 7 even if the difference in time required to reach 910°C was taken into account.

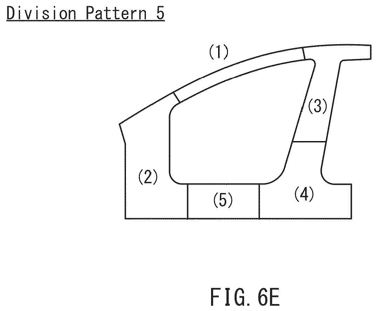

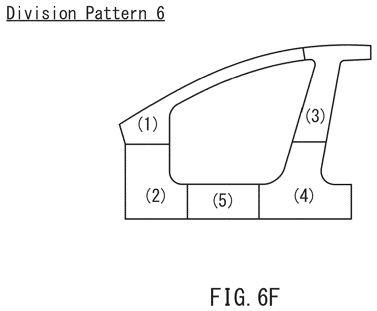

Table 4 shows analysis conditions and results for division patterns 5 and 6 shown in FIGS. 6E and 6F. In FIGS. 6E and 6F, the structural member is formed of five starting materials (1) to (5). The starting materials (1) to (5) are each lap-joined to adjacent starting materials.

[Table 4]

TABLE 4

| Symbol | Division pattern | Starting material (1) | | Starting material (2) | | Starting material (3) | | Starting material (4) | | Starting material (5) | | Smallest sheet thickness $t_{min}$, mm | Largest sheet thickness $t_{max}$, mm | Time required to reach 910°C, s | Heating completion time, s | PW, s |
|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | |
| Example 11 | 5 | A-1 | 1.2 | A | 1.4 | C | 1.2 | A-1 | 1.8 | A-1 | 1.6 | 1.2 | 3.4 | 149.5 | 327.0 | 67.5 |
| Example 12 | 5 | A-2 | 1.4 | B | 1.2 | C-1 | 1.6 | D | 1.2 | B-2 | 1.4 | 1.2 | 3.0 | 134.0 | 288.0 | 91.0 |
| Example 13 | 6 | A-1 | 1.6 | C-1 | 1.6 | A | 1.2 | B-1 | 1.8 | D | 1.2 | 1.2 | 3.2 | 149.5 | 307.5 | 87.0 |
| Example 14 | 5 | C-2 | 1.6 | B-1 | 1.6 | B | 1.4 | A-1 | 1.2 | A | 1.2 | 1.2 | 3.2 | 128.5 | 307.5 | 66.0 |
| Example 15 | 6 | B-1 | 1.2 | B | 1.2 | A-1 | 1.8 | D-1 | 1.2 | B | 1.2 | 1.2 | 3.0 | 128.5 | 288.0 | 85.5 |
| Example 16 | 5 | B-1 | 1.4 | D | 1.2 | B-1 | 1.6 | E-1 | 1.0 | A-1 | 1.2 | 1.0 | 3.0 | 107.0 | 288.0 | 64.0 |
| Comparative example 8 | 5 | A | 1.4 | A | 1.2 | C | 1.8 | A | 1.4 | A | 1.4 | 1.2 | 3.2 | 149.5 | 399.5 | -5.0 |
| Comparative example 9 | 6 | A | 1.6 | C | 1.6 | A | 1.2 | B | 1.8 | D | 1.2 | 1.2 | 3.2 | 149.5 | 399.5 | -5.0 |
| Comparative example 10 | 5 | C | 1.6 | B | 1.6 | B | 1.4 | A | 1.2 | A | 1.2 | 1.2 | 3.2 | 149.5 | 399.5 | -5.0 |
| Comparative example 11 | 6 | B | 1.2 | B | 1.2 | A | 1.8 | D | 1.2 | B | 1.2 | 1.2 | 3.0 | 149.5 | 374.5 | 20.0 |

In Examples 11 to 16 shown in Table 4, as in Examples 1 to 10 (Tables 2 and 3), at least both outer surfaces of the overlap part having the largest sheet thickness $t_{max}$ were provided with the black film. Therefore, in Examples 11 to 16, again, a sufficient process window of the heating condition was able to be ensured. As can be seen, the process window in each example was enlarged compared with a corresponding comparative example.

For example, in Example 13, the starting material (1) and the starting material (2) formed an overlap part having the largest sheet thickness $t_{max}$ = 3.2 mm, and the surface of each of the starting materials (1) and (2) that was located on the outer side of the overlap part was provided with a black film (Table 4 and FIG. 6F). On the other hand, in Comparative example 9, in which the combination of the type of the starting material and the sheet thickness was the same as in Example 13, any of the starting materials, including the overlap part, was not provided with the black film. In Example 13, heating of the overlap part was promoted, and the heating completion time of the blank was substantially reduced compared with Comparative example 9. In Example 13, the process window was enlarged by 90 seconds or more compared with Comparative example 9. In Comparative example 9, the process window of the heating condition was lost (negative).

For example, in Example 15, the starting material (1) and the starting material (3) formed an overlap part having the largest sheet thickness $t_{max}$ = 3.0 mm, and the surface of each of the starting materials (1) and (3) that was located on the outer side of the overlap part was provided with a black film (Table 4 and FIG. 6F). Furthermore, in Example 15, the starting material (3) and the starting material (4) formed an overlap part having the largest sheet thickness $t_{max}$ = 3.0 mm, and the surface of each of the starting materials (3) and (4) that was located on the outer side of the overlap part was provided with a black film. On the other hand, in Comparative example 11, in which the combination of the type of the starting material and the sheet thickness was the same as in Example 15, any of the starting materials, including the overlap part, was not provided with the black film. In Example 15, heating of the overlap part was promoted, and the heating completion time of the blank was substantially reduced compared with Comparative example 11. In Example 15, the process window was enlarged by 60 seconds or more compared with Comparative example 11.

[Second Example]

The same analysis as in the first example was performed of the press forming (hot stamping) of structural members that were double door ring parts for different types and sheet thicknesses of starting materials included in the structural members and different division patterns of the structural members.

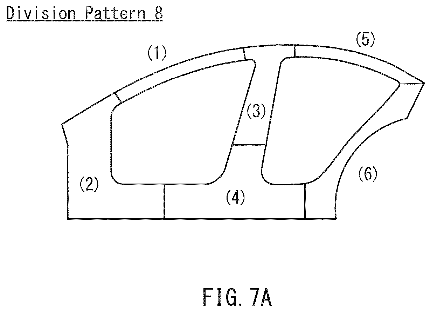

The steel sheets as the starting materials were selected from those shown in Table 1, as in the first example. The division patterns of the structural members are shown in FIGS. 7A to 7D. FIGS. 7A to 7D show the number of steel sheets (starting materials) included in the structural members that are double door ring parts and the positions of the junctures between the steel sheets in the structural members. In FIGS. 7A to 7D, each steel sheet as the starting material is denoted by a numeral in parentheses.

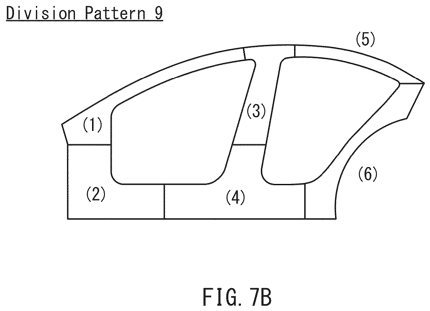

Table 5 shows analysis conditions and results for division patterns 8 and 9 shown in FIGS. 7A and 7B. In FIGS. 7A and 7B, the structural member is formed of six starting materials (1) to (6). The starting materials (1) to (6) are each lap-joined to adjacent starting materials.

[Table 5]

TABLE 5

| Symbol | Division pattern | Starting material (1) | | Starting material (2) | | Starting material (3) | | Starting material 4) | | Starting material (5) | | Starting material (6) | | Smallest sheet thickness $t_{min}$, mm | Largest sheet thickness $t_{max}$, mm | Time required to reach 910°C, s | Heating completion time, s | PW, s |
|---|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | |
| Example 17 | 8 | C-1 | 1.6 | A | 1.4 | A-1 | 1.8 | D-1 | 1.4 | B-1 | 1.0 | D-1 | 1.2 | 1.0 | 3.4 | 107.0 | 327.0 | 25.0 |
| Example 18 | 8 | A-1 | 1.6 | B | 1.3 | B-2 | 1.8 | A-1 | 1.4 | A | 1.2 | A | 1.0 | 1.0 | 3.4 | 124.5 | 327.0 | 42.5 |
| Example 19 | 9 | B-2 | 1.6 | A | 1.4 | C-1 | 1.8 | B-1 | 1.4 | B-2 | 1.0 | A-2 | 1.0 | 1.0 | 3.4 | 95.5 | 327.0 | 13.5 |
| Comparative example 12 | 8 | C | 1.6 | A | 1.4 | A | 1.8 | D | 1.4 | B | 1.0 | D | 1.2 | 1.0 | 3.4 | 124.5 | 424.5 | -55.0 |
| Comparative example 13 | 9 | B | 1.6 | A | 1.4 | C | 1.8 | B | 1.4 | B | 1.0 | A | 1.0 | 1.0 | 3.4 | 124.5 | 424.5 | -55.0 |

With reference to Table 5, in Examples 17 to 19, the starting materials (1) and (3) formed an overlap part having the largest sheet thickness $t_{max}$ = 3.4 mm, and the surfaces of the starting materials (1) and (3) that were located on the outer sides of the overlap part were provided with a black film. On the other hand, in Comparative examples 12 and 13, any of the starting materials (1) and (6), including the overlap part, was not provided with the black film.

As can be seen from Table 5, in Examples 17 to 19, heating of the overlap part having the largest sheet thickness $t_{max}$ was promoted, and the heating completion time of the blank was substantially reduced compared with Comparative examples 12 and 13. As a result, in Examples 17 to 19, the process window of the heating condition was significantly enlarged compared with Comparative examples 12 and 13.

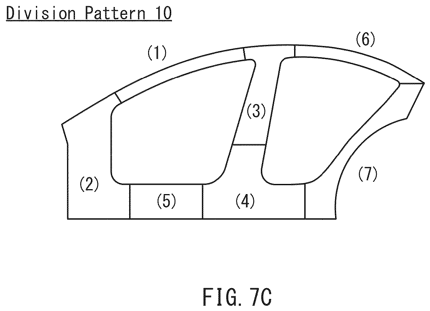

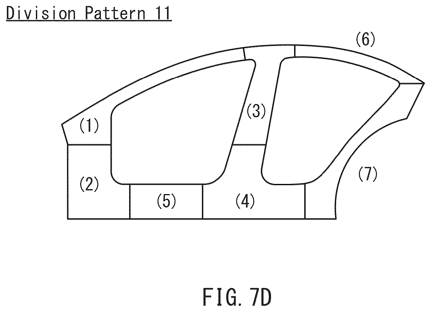

Table 6 shows analysis conditions and results for division patterns 10 and 11 shown in FIGS. 7C and 7D. In FIGS. 7C and 7D, the structural member is formed of seven starting materials (1) to (7). The starting materials (1) to (7) are each lap-joined to adjacent starting materials.

## [Table 6]

TABLE 6

| Symbol | Division pattern | Starting material (1) | | Starting material (2) | | Starting material (3) | | Starting material (4) | | Starting material (5) | | Starting material (6) | | Starting material (7) | | Smallest sheet thickness $t_{min}$, mm | Largest sheet thickness $t_{max}$, mm | Time required to reach 910°C, s | Heating completion time, s | PW, s |
|---|---|---|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | |
| Example 20 | 10 | C-1 | 1.6 | A | 1.4 | A-1 | 1.8 | D-2 | 1.2 | D-1 | 1.4 | B-1 | 1.2 | D-2 | 1.0 | 1.0 | 3.4 | 95.5 | 327.0 | 13.5 |
| Example 21 | 10 | A-1 | 1.6 | A | 1.4 | B-1 | 1.8 | A-1 | 1.2 | B-1 | 1.2 | A-1 | 1.2 | A-1 | 1.2 | 1.2 | 3.4 | 128.5 | 327.0 | 46.5 |
| Example 22 | 11 | B-1 | 1.6 | B-1 | 1.3 | C-1 | 1.8 | E-1 | 1.2 | A-2 | 1.2 | B-2 | 1.2 | A-2 | 1.0 | 1.0 | 3.4 | 95.5 | 327.0 | 13.5 |
| Comparative example 14 | 10 | C | 1.6 | A | 1.4 | A | 1.8 | D | 1.2 | D | 1.4 | B | 1.2 | D | 1.2 | 1.2 | 3.4 | 124.5 | 424.5 | -55.0 |
| Comparative example 15 | 11 | B | 1.6 | A | 1.4 | C | 1.8 | E | 1.2 | A | 1.2 | B | 1.2 | A | 1.0 | 1.0 | 3.4 | 124.5 | 424.5 | -55.0 |

With reference to Table 6, in Examples 20 to 22, the starting materials (1) and (3) formed an overlap part having the largest sheet thickness $t_{max}$ = 3.4 mm, and the surfaces of the starting materials (1) and (3) that were located on the outer sides of the overlap part were provided with a black film. On the other hand, in Comparative examples 14 and 15, any of the starting materials (1) and (7), including the overlap part, was not provided with the black film.

As can be seen from Table 6, in Examples 20 to 22, heating of the overlap part having the largest sheet thickness $t_{max}$ was promoted, and the heating completion time of the blank was substantially reduced compared with Comparative examples 14 and 15. As a result, in Examples 20 to 22, the process window of the heating condition was significantly enlarged compared with Comparative examples 14 and 15.

[Third Example]

In order to check the effect of the difference between the largest sheet thickness $t_{max}$ and the smallest sheet thickness $t_{min}$ on the press forming (hot stamping) of structural members that are single door ring parts, the same analysis as in the first example was performed for different values of $t_{max}/t_{min}$. Table 7 shows analysis conditions and results.

[Table 7]

TABLE 7

| Symbol | Division pattern | Starting material (1) | | Starting material 2) | | Starting material (3) | | Starting material (4) | | Starting material (5) | | Smallest sheet thickness $t_{min}$, mm | Largest sheet thickness $t_{max}$, mm | Sheet thickness ratio $t_{max}/t_{min}$ | Time required to reach 910°C, s | Heating completion time, s | PW, s |
|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | | |
| Test example 1 | 7-Overlap | A-1 | 1.6 | A-1 | 1.4 | C-1 | 1.4 | A-1 | 1.2 | A | 1.4 | 1.2 | 3.0 | 2.5 | 128.5 | 288.0 | 85.5 |
| Test example 2 | 5-Overlap | C-1 | 1.2 | B | 1.6 | B-1 | 2.6 | A-1 | 1.2 | A | 1.6 | 1.2 | 3.8 | 3.2 | 128.5 | 365.0 | 8.3 |
| Test example 3 | 7-Overlap | A-1 | 1.0 | A | 1.4 | A-1 | 3.3 | A | 1.0 | A | 1.4 | 1.0 | 4.3 | 4.3 | 124.5 | 413.4 | -43.9 |
| Reference example | 5-Overlap | C | 1.4 | A | 1.4 | A | 1.4 | D | 1.4 | B | 1.4 | 1.4 | 2.8 | 2.0 | 174.5 | 305.0 | 70.0 |

**EP 4 703 060 A1**

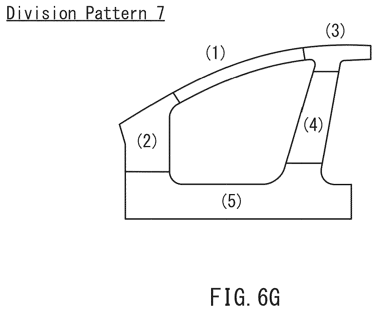

The division pattern in Test examples 1 and 3 was the division pattern 7 shown in FIG. 6G. The division pattern in Test example 2 and Reference example was the division pattern 5 shown in FIG. 6E. In Test examples 1 to 3 and Reference example, each starting material formed an overlap part with another starting material at the juncture thereof. In any of Test examples 1 to 3, both outer surfaces of the overlap part having the largest sheet thickness $t_{max}$ were provided with a black film. Furthermore, in each of Test examples 1 to 3, each of the starting materials (1) to (5) had a sheet thickness different from the sheet thickness of one or more other starting materials. On the other hand, in Reference example, all the starting materials (1) to (5) had the same sheet thickness. Furthermore, in Reference example, any of the starting materials (1) to (5), including the overlap part, was not provided with the black film.

In Reference example, since there was no difference in sheet thickness between the starting materials (1) to (5), the ratio of the largest sheet thickness $t_{max}$ (the sheet thickness of the overlap part) to the smallest sheet thickness $t_{min}$ (the sheet thickness of the starting materials (1) to (5)): $t_{max}/t_{min}$ was 2.0. In Reference example, since the difference ($t_{max}/t_{min}$) between the largest sheet thickness $t_{max}$ and the smallest sheet thickness $t_{min}$ was not large, a slight process window of the heating condition was able to be ensured, even if the emissivity of both outer surfaces of the overlap part was not increased. On the other hand, when the starting materials (1) to (5) had different sheet thicknesses, the difference ($t_{max}/t_{min}$) between the largest sheet thickness $t_{max}$ and the smallest sheet thickness $t_{min}$ was more than 2.0. In this case, the effect of increasing the emissivity of both outer surfaces of the overlap part (by providing the black film) was likely to markedly manifest itself.

As can be seen from Table 7, when both outer surfaces of the overlap part having the largest sheet thickness $t_{max}$ were provided with the black film, even if $t_{max}/t_{min}$ was more than 2.0, the heating completion time was less likely to be long, and a process window was able to be ensured (Test examples 1 and 2). In Test example 2, despite the relatively large $t_{max}/t_{min}$ of 3.2, a process window was able to be ensured. On the other hand, in Test example 3 in which $t_{max}/t_{min}$ was more than 4.0, the process window was negative.

According to the analysis results, it can be said that when there is a difference in sheet thickness between the starting materials, it is preferable that $t_{max}/t_{min} \leq 3.2$. Although $t_{max}/t_{min} > 2.0$ when there is a difference in sheet thickness between the starting materials, it is also possible that $t_{max}/t_{min} \geq 2.5$.

For Test examples 1 to 3, the productivity of the structural member and the emissions ratio of greenhouse effect gas were evaluated. In addition, for Test examples 1 to 3, the rust resistance performance of the structural member was evaluated. Table 8 shows evaluation results.

[Table 8]

TABLE 8

| Symbol | Division pattern | Productivity, items/min | Emissions ratio of greenhouse effect gas during production | Evaluation of rust resistance performance |
|---|---|---|---|---|
| Test example 1 | 7-Overlap | 4.17 | 82% | ○ |
| Test example 2 | 5-Overlap | 3.29 | 94% | ○ |
| Test example 3 | 7-Overlap | 2.90 | 100% | × |

As shown in Table 8, in Test examples 1 and 2, the productivity of the structural member was improved compared with Test example 3, since the heating completion time of the blank was reduced compared with Test example 3. Furthermore, in Test examples 1 and 2, the heating completion time of the blank was reduced compared with Test example 3, and the energy consumption required for production of the structural member was reduced, so that the emissions ratio of the greenhouse effect gas during production was also reduced. "Productivity" in Table 8 means the number of blanks (structural members) that can be heat-treated in a heating furnace in one minute. "Emissions ratio of greenhouse effect gas" means the ratio of emissions of greenhouse effect gas with respect to the test example 3. The emissions of greenhouse effect gas in the heating step was determined by multiplying the greenhouse effect gas emissions per kWh of electricity of Japan's average power in 2018 (LCA database, National Institute of Advanced Industrial Science and Technology, IDEAv3.2) by the power consumption per structural member allocated on the assumption that the power consumption per hour of the multi-stage electric heating furnace for hot stamping blank heating was 450 kWh, the furnace temperature was 920°C, the operating time per day was 15 hours, the heating and waiting time for the heating furnace was 3 hours, and the members were produced with the productivity described in Table 8. The emissions of greenhouse effect gas in the other steps (other than the heating step) in production of the structural member was calculated in the method described in a published literature concerning LCA calculation for automobile parts (Masahiro Kubo and two others, "Evaluation of the Life Cycle Greenhouse Gas (GHG) Emissions of a Lightweight Steel Body and Part", JSAE Annual Congress (Spring) Proceedings, Society of Automotive Engineers of Japan, Inc., 2022).

In Test examples 1 and 2, the heating completion time of the blank was reduced compared with Test example 3. This means that alloying of the plating layer of the thinnest starting material did not excessively proceed in heating of the blank, and the deterioration of the rust resistance performance (corrosion resistance) of the starting material was reduced. In Test examples 1 and 2, higher rust resistance performance than in Test example 3 was able to be maintained. The rust resistance performance was evaluated by cutting a corrosion evaluation test specimen (evaluation sample) from each of the overlap part and other parts of a hot-stamped structural member and performing the combined cyclic corrosion test (CCT) on the samples under cycle conditions close to the actual environment defined in the accelerated corrosion test (VDA233-102) of German Association of the Automotive Industry (VDA). In Table 8, O is shown when the rust resistance performance of all the evaluation samples taken from the multiple parts of the structural member had no problem and was evaluated to be good, and × is shown when any one of the evaluation samples was evaluated to be poor in rust resistance.

The evaluation of Test example 3 is low in comparison with Test examples 1 and 2. However, as described above in the first to third examples, by increasing the emissivity of both outer surfaces of the overlap part having the largest sheet thickness $t_{max}$, heating of the overlap part can be promoted, and the heating completion time can be reduced. In Test example 3, the emissivity of both outer surfaces of the overlap part having the largest sheet thickness $t_{max}$ are also increased, and therefore, it is estimated that the heating completion time of the blank is reduced, and the productivity, the emissions ratio of greenhouse effect gas and the rust resistance performance are improved compared with the case where the combination of the type of the starting material and the sheet thickness is the same as in Test example 3, and both outer surfaces of the overlap part are not subjected to a treatment for increasing the emissivity, for example.

REFERENCE SIGNS LIST

| | |
|---|---|
| 10: | structural member |
| 11: | member main body |
| 111: | front pillar |
| 112: | center pillar |
| 113: | rocker |
| 12: | film |
| 20: | blank |
| 21: | steel sheet (first steel sheet) |
| 22: | steel sheet (second steel sheet) |
| 23: | steel sheet |
| 21a, 22a, 23a: | base steel sheet |
| 21b, 22b, 23b: | plating layer |
| 241, 242, 243: | overlap part |
| 25: | film |
| 40: | press tooling |

**Claims**

1. A blank for hot stamping, comprising:

   multiple steel sheets that are disposed to form an annular shape in plan view of the blank and joined to each other, wherein the multiple steel sheets include:

   a first steel sheet; and
   a second steel sheet having an end part that is overlaid on and joined to an end part of the first steel sheet to form an overlap part with the end part of the first steel sheet,
   among the multiple steel sheets, a steel sheet that forms a part having a smallest sheet thickness in the blank is a plated steel sheet that has a base steel sheet and a plating layer provided on the base steel sheet,
   the overlap part has a largest sheet thickness in the blank, and
   an emissivity of a surface of each of the first steel sheet and the second steel sheet that is located on an outer side of the overlap part is higher than an emissivity of at least one of other surfaces of the multiple steel sheets.

2. The blank according to Claim 1, wherein each of the multiple steel sheets is a plated steel sheet that has a base steel sheet and a plating layer provided on the base steel sheet.

3. The blank according to Claim 2, wherein the plating layer is an aluminum-based plating layer.

4. The blank according to Claim 1, wherein the surface of each of the first steel sheet and the second steel sheet that is located on the outer side of the overlap part is coated with a film having an emissivity of 60% or more at a temperature of 25°C and a wavelength of 8.0 $\mu$m.

5. The blank according to Claim 1, wherein the surface of each of the first steel sheet and the second steel sheet that is located on the outer side of the overlap part is coated with a film,

the film contains carbon black, one or more oxides selected from among the group consisting of Zr oxide, Zn oxide and Ti oxide, and 0 to 0.30 g/m$^2$ of silica, and
provided that a content of the carbon black in the film is $X_{CB}$ (g/m$^2$), and a content of the oxide is $X_{Oxide}$ (g/m$^2$), $X_{CB}$ and $X_{Oxide}$ satisfy Formula (1):

$$118.9 \leq 24280/\{6700/(100 + 76 \times X_{CB}) + 18000/(130 + 65 \times X_{Oxide})\} \leq 332.0$$

$$(1)$$

6. The blank according to Claim 1, wherein the multiple steel sheets include two or more steel sheets having different sheet thicknesses,
provided that a sheet thickness of the overlap part is $t_{max}$, and a sheet thickness of the steel sheet that form a part having a smallest sheet thickness in the blank is $t_{min}$, $t_{max}/t_{min} \leq 3.2$.

7. A production method for a structural member, comprising:

a step of preparing the blank according to any one of Claims 1 to 6;
a step of heating the multiple steel sheets included in the blank to an austenite transformation completion temperature or higher; and
a step of shaping and quenching the heated blank into a structural member having an annular shape in plan view with press tooling.

8. A structural member, comprising:

a member main body that is formed of multiple steel sheets joined to each other and has an annular shape in plan view, the multiple steel sheets including a first steel sheet and a second steel sheet having an end part that is overlaid on and joined to an end part of the first steel sheet to form an overlap part with the end part of the first steel sheet; and
a film that is provided on a surface of each of the first steel sheet and the second steel sheet that is located on an outer side of the overlap part and contains 0.001 g/m$^2$ or more of one or more oxides selected from among the group consisting of Zr oxide, Zn oxide and Ti oxide.

9. A structural member, comprising:

a member main body that is formed of multiple steel sheets joined to each other and has an annular shape in plan view, the multiple steel sheets including a first steel sheet and a second steel sheet having an end part that is overlaid on and joined to an end part of the first steel sheet to form an overlap part with the end part of the first steel sheet; and
a film that is provided on a surface of each of the first steel sheet and the second steel sheet that is located on an outer side of the overlap part and contains 0.500 g/m$^2$ or less carbon black.

10. The structural member according to Claim 8 or 9, wherein the structural member is a door ring part of an automobile, and
the member main body includes a front pillar, a center pillar and a rocker that connects the front pillar and the center pillar to each other.

FIG. 1

FIG. 2

20

IIIB    IIIB

21

IIIC

IIIC

23

22

IIID    IIID

FIG. 3A

20

FIG. 3B

20

21 25 21b 21a $t_1$ 242 $t_3, t_{min}$ 23b 23a 23

FIG. 3C

FIG. 3D

FIG. 3E

40

42

20

41

FIG.3F

40

10, 20

42

41

FIG. 3G

FIG. 4

FIG. 5

Division Pattern 1

FIG. 6A

Division Pattern 2

FIG. 6B

Division Pattern 3

FIG. 6C

Division Pattern 4

FIG. 6D

Division Pattern 5

FIG. 6E

Division Pattern 6

FIG. 6F

<u>Division Pattern 7</u>

FIG. 6G

Division Pattern 8

FIG. 7A

Division Pattern 9

FIG. 7B

Division Pattern 10

FIG. 7C

Division Pattern 11

FIG. 7D

# EP 4 703 060 A1

<table>
<tr><td colspan="2"><strong>INTERNATIONAL SEARCH REPORT</strong></td><td>International application No.<br><strong>PCT/JP2024/016120</strong></td></tr>
</table>

<table>
<tr><td><strong>A. CLASSIFICATION OF SUBJECT MATTER</strong></td></tr>
<tr><td><strong>B21D 22/20</strong>(2006.01)i; <strong>B21D 22/26</strong>(2006.01)i; <strong>B62D 25/02</strong>(2006.01)i; <strong>B62D 25/04</strong>(2006.01)i; <strong>B62D 25/20</strong>(2006.01)i; <strong>C23C 26/00</strong>(2006.01)i<br>FI: B21D22/20 E; B21D22/20 H; B21D22/26 D; B62D25/02 A; B62D25/04 A; B62D25/04 B; B62D25/20 F; C23C26/00 A</td></tr>
<tr><td>According to International Patent Classification (IPC) or to both national classification and IPC</td></tr>
</table>

<table>
<tr><td colspan="2"><strong>B. FIELDS SEARCHED</strong></td></tr>
<tr><td colspan="2">Minimum documentation searched (classification system followed by classification symbols)<br>B21D22/20; B21D22/26; B62D25/02; B62D25/04; B62D25/20; C23C26/00</td></tr>
<tr><td colspan="2">Documentation searched other than minimum documentation to the extent that such documents are included in the fields searched<br><br>Published examined utility model applications of Japan 1922-1996<br>Published unexamined utility model applications of Japan 1971-2024<br>Registered utility model specifications of Japan 1996-2024<br>Published registered utility model applications of Japan 1994-2024</td></tr>
<tr><td colspan="2">Electronic data base consulted during the international search (name of data base and, where practicable, search terms used)</td></tr>
</table>

<table>
<tr><td colspan="3"><strong>C. DOCUMENTS CONSIDERED TO BE RELEVANT</strong></td></tr>
<tr><td>Category*</td><td>Citation of document, with indication, where appropriate, of the relevant passages</td><td>Relevant to claim No.</td></tr>
<tr><td>A</td><td>WO 2022/215229 A1 (NIPPON STEEL CORPORATION) 13 October 2022 (2022-10-13)</td><td>1-10</td></tr>
<tr><td>A</td><td>JP 2021-528248 A (AUTOTECH ENGINEERING S.L.) 21 October 2021 (2021-10-21)</td><td>1-10</td></tr>
<tr><td>A</td><td>JP 2021-154370 A (NIPPON STEEL CORPORATION) 07 October 2021 (2021-10-07)</td><td>1-10</td></tr>
<tr><td>A</td><td>JP 7260765 B2 (NIPPON STEEL CORPORATION) 19 April 2023 (2023-04-19)</td><td>1-10</td></tr>
<tr><td>P, A</td><td>JP 2023-180687 A (KEYLEX CORP.) 21 December 2023 (2023-12-21)</td><td>1-10</td></tr>
<tr><td>P, A</td><td>WO 2023/224122 A1 (NIPPON STEEL CORPORATION) 23 November 2023 (2023-11-23)</td><td>1-10</td></tr>
</table>

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

<table>
<tr><td>Date of the actual completion of the international search<br><br><strong>17 June 2024</strong></td><td>Date of mailing of the international search report<br><br><strong>16 July 2024</strong></td></tr>
<tr><td>Name and mailing address of the ISA/JP<br><br><strong>Japan Patent Office (ISA/JP)<br>3-4-3 Kasumigaseki, Chiyoda-ku, Tokyo 100-8915<br>Japan</strong></td><td>Authorized officer<br><br><br><br>Telephone No.</td></tr>
</table>

Form PCT/ISA/210 (second sheet) (July 2022)

**INTERNATIONAL SEARCH REPORT**
Information on patent family members

International application No.

**PCT/JP2024/016120**

| Patent document cited in search report | | | Publication date (day/month/year) | Patent family member(s) | | | Publication date (day/month/year) |
|---|---|---|---|---|---|---|---|
| WO | 2022/215229 | A1 | 13 October 2022 | EP | 4268989 | A1 | |
| | | | | CN | 117157428 | A | |
| | | | | KR | 10-2023-0155536 | A | |
| JP | 2021-528248 | A | 21 October 2021 | WO | 2020/002335 | A1 | |
| | | | | KR | 10-2021-0024592 | A | |
| | | | | CN | 112566836 | A | |
| JP | 2021-154370 | A | 07 October 2021 | (Family: none) | | | |
| JP | 7260765 | B2 | 19 April 2023 | (Family: none) | | | |
| JP | 2023-180687 | A | 21 December 2023 | (Family: none) | | | |
| WO | 2023/224122 | A1 | 23 November 2023 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2022215229 A

- JP 2021528248 W

### Non-patent literature cited in the description

- Evaluation of the Life Cycle Greenhouse Gas (GHG) Emissions of a Lightweight Steel Body and Part. **MASAHIRO KUBO**. JSAE Annual Congress (Spring) Proceedings. Society of Automotive Engineers of Japan, Inc, 2022